# EUROPEAN PATENT APPLICATION

(11) **EP 4 109 387 A1**
(43) Date of publication of application: **28.12.2022**
(21) Application number: 22162061.0
(22) Date of filing: 15.03.2022
(51) Int. Cl.: G06T 1/20

(54) **MORPHING COMPUTER VISION PIPELINE**

(30) Priority: 26.06.2021 US 202117359521
(71) Applicant: INTEL Corporation, Santa Clara, CA 95054 (US)
(72) Inventor: MARTINEZ-SPESSOT, Cesar I., Hillsboro, 97123 (US); GUZMAN, Mateo, Beaverton, 97078 (US); GUIM BERNAT, Francesc, 08036 Barcelona (ES); CARRANZA, Marcos E., Portland, 97229 (US); OLIVER, Dario N., Hillsboro, 97123 (US)
(74) Representative: Maiwald GmbH

(57) **Abstract**

In one embodiment, a compute device implements a node of a computing infrastructure used to execute a computer vision (CV) pipeline. The compute device receives a video stream to be processed through the CV pipeline and performs a first portion of the CV pipeline. The compute device then receives a peer node availability indicating peer nodes in the computing infrastructure that are available to perform a second portion of the CV pipeline. Based on the peer node availability, the compute device partitions the second portion of the CV pipeline into one or more partial CV pipelines and offloads the partial CV pipeline(s) to a subset of the peer nodes.

## Description

### FIELD OF THE SPECIFICATION

This disclosure relates in general to the field of computer vision, and more particularly, though not exclusively, to a morphing computer vision pipeline.

### BACKGROUND

Computer vision (CV) pipelines may be used to analyze video content captured by cameras in real time. For example, a CV pipeline may perform a series of tasks or steps on a video stream captured by a camera to detect the underlying video content in the stream. A CV pipeline typically requires a significant amount of compute resources, however, particularly when a high level of activity is occurring in the field-of-view of the camera generating the stream. As a result, in some cases, smart cameras and other resource-constrained edge devices may be unable to handle the processing required by CV pipelines.

### BRIEF DESCRIPTION OF THE DRAWINGS

The present disclosure is best understood from the following detailed description when read with the accompanying figures. It is emphasized that, in accordance with the standard practice in the industry, various features are not necessarily drawn to scale, and are used for illustration purposes only. Where a scale is shown, explicitly or implicitly, it provides only one illustrative example. In other embodiments, the dimensions of the various features may be arbitrarily increased or reduced for clarity of discussion.
**FIG. 1** illustrates an example computing infrastructure for computer vision pipelines in accordance with certain embodiments.
**FIG. 2A-C** illustrate an example of partitioning a computer vision pipeline into partial pipelines.
**FIG. 3** illustrates an example of the varying resource requirements of a computer vision pipeline based on the video input.
**FIG. 4A-B** illustrate an example of a computer vision pipeline that dynamically morphs based on context in accordance with certain embodiments.
**FIG. 5** illustrates an example embodiment of a computing infrastructure that supports morphing computer vision pipelines.
**FIG. 6** illustrates a flowchart for processing a video stream through a morphing computer vision pipeline in accordance with certain embodiments.
**FIG. 7** illustrates an overview of an edge cloud configuration for edge computing.
**FIG. 8** illustrates operational layers among endpoints, an edge cloud, and cloud computing environments.
**FIG. 9** illustrates an example approach for networking and services in an edge computing system.
**FIG. 10** illustrates deployment of a virtual edge configuration in an edge computing system operated among multiple edge nodes and multiple tenants.
**FIG. 11** illustrates a compute and communication use case involving mobile access to applications in an edge computing system.
**FIG. 12** illustrates an example mobile edge system reference architecture, arranged according to an ETSI Multi-Access Edge Computing (MEC) specification.
**FIG. 13A** provides an overview of example components for compute deployed at a compute node in an edge computing system.
**FIG. 13B** provides a further overview of example components within a computing device in an edge computing system.
**FIG. 14** illustrates an example software distribution platform to distribute software.

### EMBODIMENTS OF THE DISCLOSURE

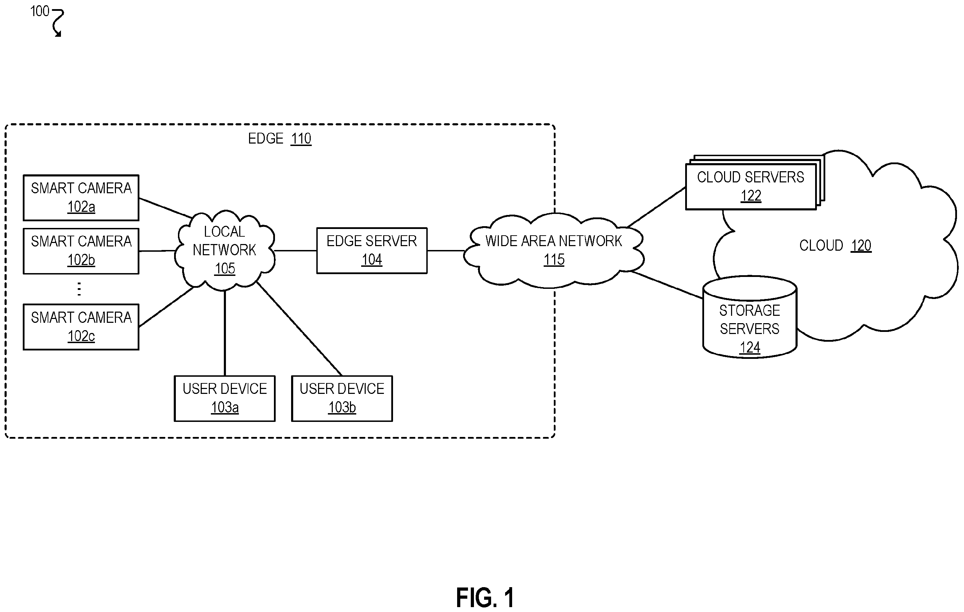

**FIG. 1** illustrates an example computing infrastructure 100 for computer vision (CV) pipelines in accordance with certain embodiments. In the illustrated example, the computing infrastructure 100 includes an edge infrastructure 110 and a cloud infrastructure 120, which are communicatively coupled via a wide area network (WAN) 115 (e.g., the Internet). The edge infrastructure 110 includes smart cameras 102a-c, user devices 103a-b, and an edge server 104, which are communicatively coupled via a local network 105 (e.g., a wired and/or wireless network, such as a WiFi mesh network). The cloud infrastructure 130 includes cloud computing servers 122 and storage servers 124.

In the illustrated example, computer vision (CV) pipelines may be deployed on computing infrastructure 100 to analyze video content captured by the cameras 102a-c in real time. For example, a CV pipeline may process a video stream captured by a camera 102 through a series of tasks or steps implemented by a collection of processing modules, which often leverage artificial intelligence (Al) and/or machine learning (ML) techniques to detect the video content captured in the stream. The tasks in a typical CV pipeline may include encoding, decoding, preprocessing (e.g., resizing), machine learning (ML) inferencing for content detection/recognition (e.g., using multiple models per feed), and so forth.

CV pipelines typically require a significant amount of compute resources, however, particularly when high levels of activity are occurring in the field-of-view of the cameras whose streams are being processed. As a result, due to the typical resource constraints of smart cameras 102a-c and other edge devices, those devices may be unable to perform all of the pipeline processing themselves.

Thus, in some cases, an edge server 104 may be deployed and/or provisioned to perform some or all of the CV pipeline processing on behalf of a group of cameras 102a-c. In many cases, however, a single edge server 104 may be required to serve a large number of cameras 102a-c (e.g., 50 or more) while also providing numerous other unrelated services that also leverage the edge infrastructure 110. As a result, the edge server 104 can become overloaded at times, particularly when the activity levels captured by the cameras 102a-c hit their peak.

Thus, one of the primary challenges is determining how to map services in different tiers of the edge architecture to ensure there is enough room and flexibility on the edge servers 104 to simultaneously manage a large number of video feeds (e.g., 50 or more) while also running other unrelated services (e.g., smart city services). In many cases, simply scaling up the edge infrastructure 110 by deploying additional edge servers 104 is impractical considering where the servers are deployed, as they are often housed inside racks, cabinets, and other enclosures with limited physical space that are mounted on or otherwise apart of roadside infrastructure and other structures (e.g., poles of streetlights and traffic lights, roadside signage, bridges, buildings, billboards, cell towers, and so forth). In addition, offloading the processing further along on the edge or in the cloud can also be problematic due to the latency requirements of many CV pipelines.

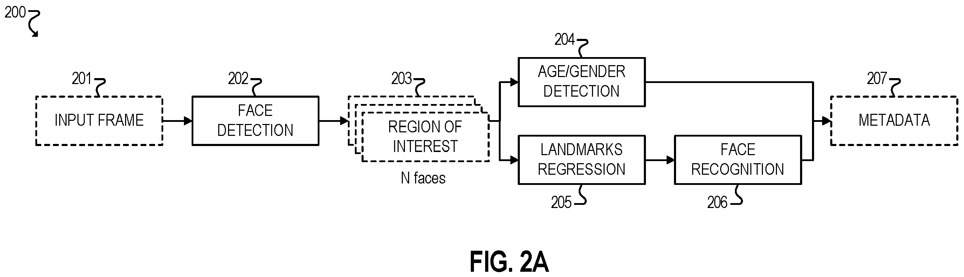

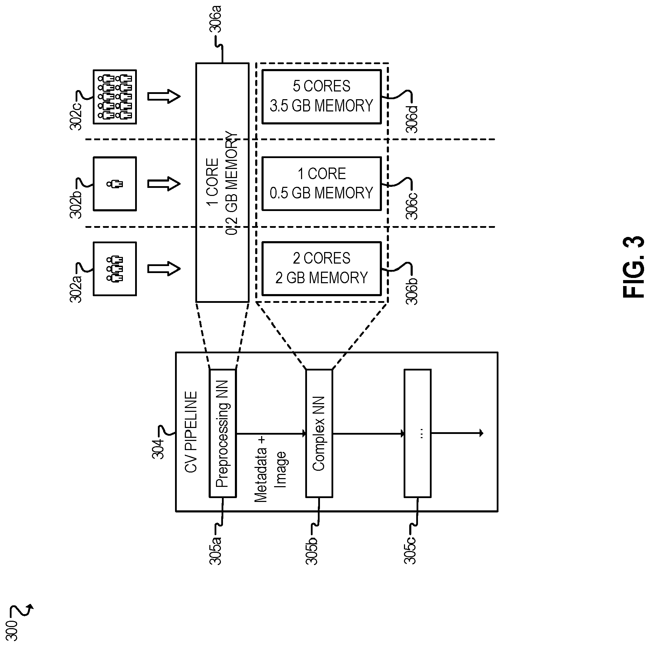

Another important consideration is that the resource requirements for CV pipelines typically depend on the video inputs. For example, if a pipeline with a face detection algorithm detects five faces in a frame of a video stream, the remainder of the pipeline may be replicated into five parallel pipelines: one pipeline per face (as shown in FIG. 2A). Even for an individual algorithm or task in the pipeline, the resource requirements may vary based on the input. As an example, for person detection, the required compute resources are different for a scene with one person versus a scene with 10 people (e.g., as shown in FIG. 3). In some cases, this can even result in security flaws caused by "bad AI" (e.g., Denial-of-Service (DoS) attacks, such as showing 20 people in a camera that can only process up to 15 people in order to overload the resources on the camera).

Smart cameras and other edge devices can potentially be leveraged to alleviate the compute demands of CV pipelines from the next tiers of the edge and potentially reduce backhaul traffic requirements. However, smart cameras are still in a relatively early stage of development. For example, many smart cameras are limited to basic client-server architectures where each camera transmits video to a centralized server for processing. More recent smart cameras have the ability to process a single ML model for a specific fixed function (e.g., a model for license plate recognition), but they are often very difficult to manage, and some even require manual operation for updates (e.g., similar to older embedded devices). However, these "fixed-function" cameras cannot dynamically activate or deactivate components as part of a pipeline to adapt to a specific context. As a result, the load usually ends up on an edge server.

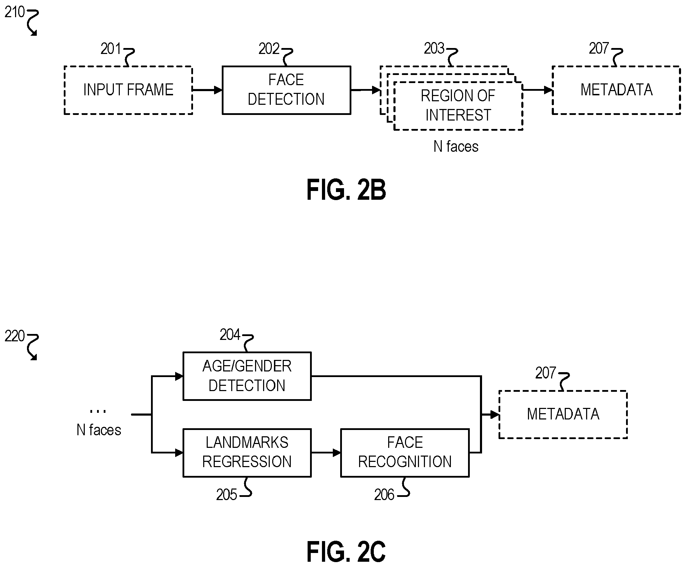

The latest smart cameras provide slightly more flexibility, such as provisioning different workloads and running pipelines, performing remote management, and so forth. However, these cameras do not have the flexibility to dynamically adapt the pipelines in real time based on context. For example, when a pipeline grows due to the input (e.g., several face processing branches are spawned), the camera may not be able to process the full pipeline, as the resources on the camera are typically very limited and may only include a single processing element (e.g., a single processor core or VPU core). As a result, the pipeline implementation leaves a very small part of the pipeline on the camera and distributes a much bigger part to the server. However, the pipeline distribution is performed statically rather than dynamically. For example, during development, the pipeline distribution is addressed by statically deploying fixed predetermined slices of the pipeline on each of the camera and the server (e.g., as shown in FIGS. 2B-C). This approach fails to utilize all the resources available in the camera (and in other nearby cameras) in many situations. For example, when the video only contains a few objects, the camera may be able to process multiple models even though the fixed/divided pipeline only deploys a single model on the camera and the rest on the server.

Accordingly, there are several challenges to overcome in order to fully utilize smart cameras and other resource-constrained edge devices for CV pipelines to reduce the load on edge servers. In particular, smart cameras have a limited amount of compute capabilities, which may be sufficient for some scenarios but not others. For instance, a person detection pipeline with anti-spoofing mechanisms is a complex model that requires high compute horsepower, which may exceed the capabilities of a smart camera. In some cases, however, some of the conditions and requirements of the pipeline/model may be relaxed in order to reduce the compute requirements (e.g., by reducing the resolution of the image/video input), thus enabling the smart camera to process the model. Existing pipelines fail to take this into consideration.

Moreover, depending on dynamic conditions, some AI pipelines running on edge devices and appliances may require more or less compute horsepower. For instance, if a camera only detects four people, it may be able to perform person identification using its own resources. However, if eight people are identified, the camera may not be able to perform the compute by itself-rather, the compute may need to be performed in a more powerful edge appliance (e.g., an edge server 104) or may need to be scaled out or distributed among multiple edge devices (smart cameras 102a-c, edge servers 104, and/or other edge processing devices). Moreover, if a deployment model has a large number of edge compute devices or appliances, some devices may be underutilized while others may be unable to cope with the workload. Existing pipelines do not provide the flexibility to dynamically adapt and distribute pipeline tasks across multiple devices based on the runtime context.

Thus, existing solutions lack mechanisms for allowing flexible pipelines to be distributed on several nodes (e.g., cameras, servers, or any other available compute device) in order to make the deployment more efficient and even secure.

Accordingly, this disclosure presents embodiments for performing automatic load balancing, resource sharing, and problem relaxation (e.g., based on an applicable service level agreement (SLA)) in order to maximize system utilization and/or reduce the load on edge servers. The functionality implemented by these embodiments is performed dynamically based on the following types of information: (i) the different options and configurations that are possible for different parts of the AI/CV pipeline; (ii) the dynamic conditions and requirements of the pipeline at runtime; and (iii) the resource availability of all available edge devices in the infrastructure (e.g., smart cameras 102a-c, edge server 104). These embodiments are described in further detail throughout this disclosure.

**FIGS. 2A-C** illustrate an example of partitioning a computer vision (CV) pipeline into multiple partial pipelines when resource availability is low. In particular, FIG. 2A illustrates the full CV pipeline 200, which includes various modules for tasks relating to face detection, face recognition, and age/gender detection. For example, in pipeline 200, an input frame 201 from a video stream is fed into a face detection module 202, which detects N faces and outputs N corresponding regions-of-interest (Rol) in the frame where those face were detected. Each face/region-of-interest is then independently processed through the remaining portions of the pipeline. In particular, each face is fed into an age/gender detection module 204 to detect the age/gender of the person. Each face is also fed into a landmarks regression module 205 to detect key facial landmarks using regression techniques, and those facial landmarks are then fed into the facial recognition module 206 to detect the identity of the person. Once complete, the final results of the pipeline are output as metadata 207, potentially along with the corresponding portions/frames of the video stream. For example, the metadata 207 may indicate the location of faces detected in the frame (e.g., via bounding boxes), the age/gender detected for each face, the type/location of each facial landmark detected for each face, and the identity of each face detected using facial recognition.

A smart camera may initially attempt to perform the full pipeline 200 on its own (assuming it has the capabilities to do so). When multiple faces are detected in the stream, however, multiple parallel instances of the remaining portions of the pipeline are spawned (e.g., age/gender detection and landmarks detection/facial recognition), which significantly increases the compute requirements.

As a result, once the camera begins to run low on resources, the full pipeline 200 may be statically partitioned into two predetermined partial pipelines: one partial pipeline 210 deployed on the camera, and another partial pipeline 220 offloaded to an edge server, as shown in FIGS. 2B-C. FIG. 2B illustrates the partial pipeline 210 deployed on the camera, and FIG. 2C illustrates the partial pipeline 220 offloaded to the edge server. The partial pipeline 210 deployed on the camera only handles a single machine learning (ML) model for face detection 202 (as shown in FIG. 2B), while the partial pipeline 220 deployed on the edge server handles the remaining portions of the pipeline 200 that the camera is unable to handle (as shown in FIG. 2C), including age/gender detection 204, landmarks regression 205, and face recognition 206 for all N faces detected by the camera.

In this manner, whenever the smart camera is running low on resources, the full pipeline 200 is statically partitioned into the same two partial pipelines 210, 220 which are deployed on the camera and edge server, respectively. This static deployment model fails to utilize all the resources available in the camera-and other nearby cameras-in every situation (e.g., based on the content contained in the video input).

By contrast, the embodiments in this disclosure dynamically partition a CV pipeline based on the runtime context. For example, the runtime context may include the resource availability on all available edge devices (e.g., the primary camera, other peer cameras, the edge server, and/or any other available edge processing devices), the compute requirements for the pipeline based on its current state (e.g., the required compute based on the number of instances of certain type of content-such as a face-that are detected in the current frame), the SLA requirements, and so forth. Moreover, based on the runtime context, the pipeline is dynamically partitioned into a variable number of partial pipelines-each of which contains a dynamically selected subset of pipeline tasks-which are offloaded to peer nodes that are dynamically selected based on resource availability. In this manner, the resource utilization of the smart cameras and other peer edge nodes significantly increases, which frees up some of the load on the edge server.

**FIG. 3** illustrates an example 300 of how the resource requirements of a computer vision (CV) pipeline 304 may vary based on the video input. In the illustrated example, the CV pipeline 304 includes processing modules 305a-c for performing various tasks on the frames or scenes 302a-c of a video stream, such as a neural network 305a used for preprocessing, a complex neural network 305b used for person detection/recognition, and so forth. At runtime, the resource requirements for the different stages or tasks 305a-c of the pipeline 304 may fluctuate based on the content captured and detected in the frames or scenes 302a-c of the video stream during previous stages of the pipeline 304.

Using person detection as an example, the required compute resources may depend on the number of people captured and detected in a frame 302a-c of the video stream. The illustrated example depicts the required compute resources 306a-d-such as the number of processing cores (e.g., CPU cores, GPU cores, VPU cores) and the amount of memory-for the different stages or tasks 305a-c of the pipeline 304 based on the number of people in each frame 302a-c being analyzed.

In the illustrated example, the preprocessing stage 305a has the same resource requirements 306a regardless of the input 302a-c. In particular, the resource requirements 306a for the preprocessing stage include 1 core and 0.2 gigabytes (GB) of memory for each frame 302a-c shown.

The complex neural network stage 305b for person detection, however, has varying resource requirements 306b-d depending on the number of people in the respective frames 302a-c. For example, a frame 302a with three people requires 2 cores and 2 GB of memory, a frame 302b with one person requires 1 core and 0.5 GB of memory, and a frame 302c with 10 people requires 5 cores and 3.5 GB of memory.

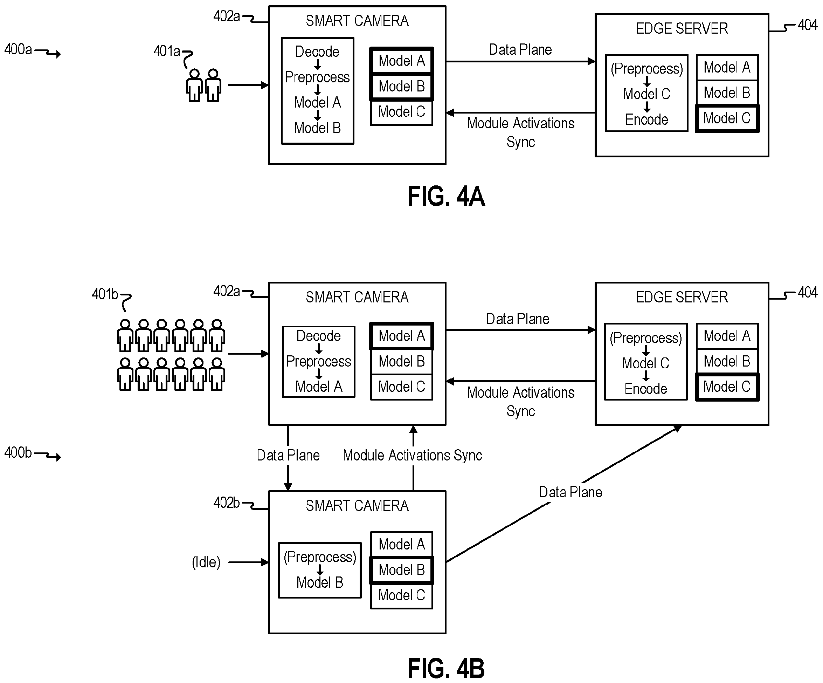

**FIGS. 4A-B** illustrate an example of a computer vision (CV) pipeline that dynamically morphs based on context in accordance with certain embodiments. In the illustrated example, each device in the infrastructure (e.g., cameras 402a-b, edge server 404, or any other available compute device) includes the complete set of processing modules required by the CV pipeline, which are selectively activated or deactivated based on the runtime context in order to dynamically distribute the pipeline across the available devices.

For example, the pipeline context may include the following types of information:
(a) content captured in the current portion of the video being processed and the compute requirements for that content;
(b) the resource availability for all available compute devices (e.g., current resource availability and learnings/predictions derived from past resource availability);
(c) SLA requirements (e.g., performance requirements for the overall pipeline and/or individual tasks in the pipeline, such as the overall pipeline latency or the inference accuracy of a particular model);
(d) service provider/infrastructure requirements (e.g., minimizing the load on edge servers);
(e) pipeline morphing criteria (e.g., criteria for reducing or increasing the complexity/performance of pipeline tasks or models in certain situations); and
(f) any other performance objectives, requirements, or constraints.

In the illustrated example, one of the primary goals is to reduce the load on edge servers in order to leave room for additional services provided by the infrastructure. As a result, the smart cameras 402a-b are prioritized over the edge server 404 when the pipeline is distributed. For example, the pipeline is only distributed to the edge server 404 after the resources of the available smart cameras (or other edge devices) have been exhausted. In this manner, the edge server 404 is always the last component in the distributed pipeline and receives the results of prior processing performed by the smart cameras 402a-b.

Typically, the initial compute for the pipeline will be performed by the smart camera 402a that captures the video feed, but any other available compute device in the infrastructure can be used to offload the execution of pipeline components (e.g., another smart camera or compute device with available resources in the same local network). The load balancing and offloading decisions are performed dynamically based on the pipeline context information referenced above (e.g., video content/compute requirements, current/predicted resource availability, SLA/infrastructure requirements, pipeline morphing criteria). For example, after the smart camera 402a that captures the video has been performing the pipeline for some amount of time, the activity level captured in the video may increase (e.g., more people are in the field of view of the camera), which increases the compute requirements for the pipeline and may cause the smart camera 402a to start running low on resources (e.g., compute/memory). In some cases, for example, low resource availability may be determined based on a threshold or range, such as a certain percentage of resource utilization of a particular resource or combination of resources (e.g., CPU/GPU/VPU utilization, memory utilization). Alternatively, low resource availability may be when the actual/predicted resource availability is insufficient to handle the actual/predicted compute requirements of the pipeline. As a result, when the smart camera 402a is low on resources, some or all of the pipeline may be offloaded to other peer nodes.

In FIGS. 4A-B, two scenarios 400a-b are shown where the same pipeline is being used to process different video content. The pipeline includes sequential calls to models A, B, and C (along with other decoding/preprocessing/encoding steps), and each device in the infrastructure is provisioned with the processing modules for the full pipeline (e.g., models A, B, and C).

In the first scenario 400a, the video 401a captured by the smart camera 402a contains two people. If appropriate, the smart camera 402a first decodes the video 401a and performs some preprocessing. Since the number of people captured in the video 401a is relatively small, the smart camera 402a is able to run models A and B while almost reaching its capacity limits, but model C is offloaded. Since there are no other devices with available resources, model C is offloaded to the edge server 404. For example, the edge server 404 receives the video stream 401a and the already processed metadata from models A and B, performs any appropriate preprocessing, and then performs the processing for model C. In addition, the edge server 404 may also re-encode the video stream 401a at the end of the pipeline before possibly transmitting it to another destination.

In the second scenario 400b, the video 401b captured by the smart camera 402a contains 12 people. Since more people are captured by the camera 402a, the compute requirements increase and the camera 402a is only able to process model A, so the camera 402a advertises to the rest of the network that it needs help with models B and C (along with any applicable requirements associated with those tasks, such as SLA performance requirements).

A distributed election leader mechanism is used to select from the available nodes (e.g., based on their resource availability). Since smart camera 402b is not being heavily used at this time (its feed is idle) and also complies with the workload requirements/SLAs, it collaborates on part of the pipeline processing by taking on model B. However, smart camera 402b cannot also take on model C, so model C is instead offloaded to the edge server 404.

In this scenario, smart camera 402b receives the video feed from smart camera 402a, along with the existing metadata generated by the processing associated with model A. Smart camera 402b then performs any appropriate preprocessing and processing associated with model B, and then sends the results to the edge server 404 (the last receiving element in the pipeline). The edge server 404 then performs the preprocessing/processing associated with model C, and then optionally re-encodes the video stream before transmitting it to another destination.

Moreover, the pipeline management decisions are being continuously reevaluated based on the runtime context/status of the pipeline. As a result, the pipeline may be periodically redistributed among the nodes (e.g., smart cameras 402a-b and edge server 404) as the pipeline context changes (e.g., changes to the actual or predicted resource availability and compute requirements). For example, in scenario 400b, additional resources may free up on smart camera 402b after some period of time, allowing smart camera 402b to perform models B and C instead of offloading model C to the edge server 404. Accordingly, the pipeline may be redistributed such that smart camera 402a is performing model A, smart camera 402b is performing models B and C, and the edge server 404 is not currently performing any part of the pipeline.

Meanwhile, all the telemetry associated with the pipeline (e.g., resource availability of the edge devices and pipeline metadata) is collected on the edge server 404 for training, which enables the pipeline to be distributed in a smarter way going forward. In particular, the telemetry data may be used by artificial intelligence (Al) and machine learning (ML) techniques to train a model to predict the future context of the pipeline based on the past context. For example, by learning when more people will be in a certain place at a certain time, as well as learning the resource availability of the edge devices at that time, it is possible to proactively decide what will be processed and where (e.g., which tasks/portions of the pipeline will be processed on which devices) depending on predicted availability. In this manner, the pipeline morphs proactively rather than reactively.

In some cases, a processing pipeline may also allow the use of alternative models in order to make the processing of certain functions possible on other devices. In particular, alternative models with lower complexity and less compute requirements may be suitable for resource-constrained devices that are unable to handle the compute requirements of the default models in the pipeline. For example, some pipelines may support complexity reduction using a reduced input resolution or a neural network model with lower accuracy (e.g., an alternative model with 86% accuracy instead of a preferred model with 95% accuracy). In this manner, the processing modules of a pipeline can be dynamically morphed to adjust the performance/requirements of the pipeline at runtime. In this scenario, all alternative models should be made available on the device once a new load is decided to be executed on that device. Any criteria or requirements relating to complexity and performance adjustments supported by a pipeline can be informed by an edge device in the request to offload part of the pipeline.

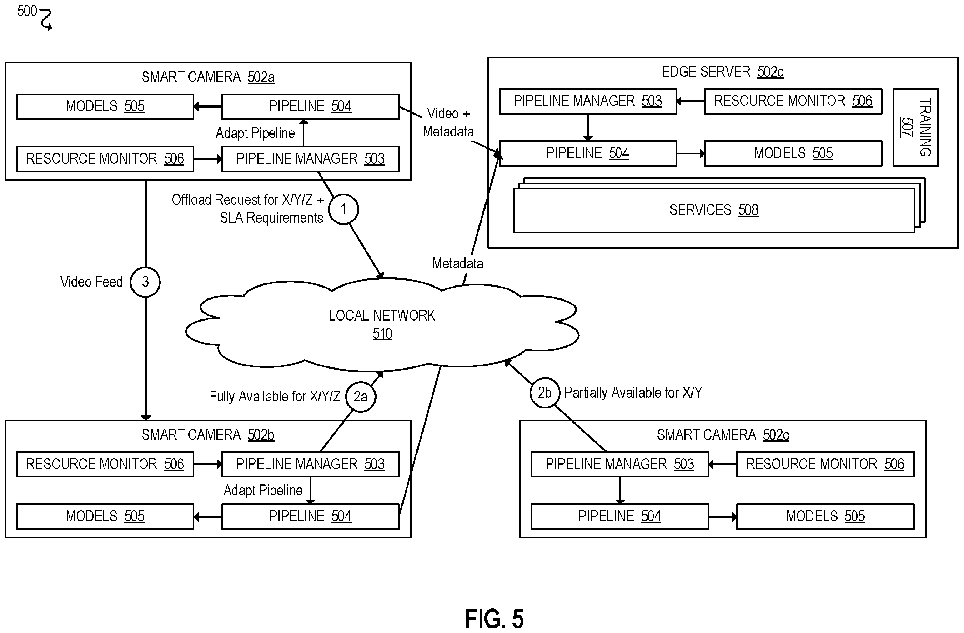

**FIG.** 5 illustrates an example embodiment of a computing infrastructure 500 that supports morphing computer vision (CV) pipelines. In the illustrated embodiment, the computing infrastructure 500 includes a collection of compute nodes 502a-d, including three smart cameras 502a-c and an edge server 502d. Moreover, the following set of components is implemented on each compute node 502a-d: (i) a pipeline manager 503; (ii) a pipeline 504; (iii) a collection of models 505; and (iv) a resource monitor 506.

The pipeline 504 includes a sequence of tasks for performing AI actions on video feeds, which includes the primary machine learning (ML) models 505 required by the pipeline 504 along with any accepted alternatives (e.g., lower-complexity models with different resolutions).

The models 505 in the AI pipeline 504 are used to perform some specific action, such as person detection, face recognition, face identification, object detection, and so forth.

The resource monitor 506 is used to monitor, collect, and report telemetry data, such as the use and availability of resources (e.g., time, % CPU usage, memory usage, and so forth), the results of the pipeline processing (e.g., the pipeline metadata), and so forth.

The pipeline manager 503 manages the deployment and execution of the pipeline 504 across the respective compute nodes 502a-d in the infrastructure 500. In particular, the pipeline manager 503 dynamically adapts/morphs the pipeline 504 based on the runtime context.

In order to make the pipeline management decisions, the pipeline manager 503 considers the available capacity on the compute nodes 502a-d, along with predictions received from a training module 507 on the edge server 502d based on past use for the same conditions (e.g., in order know when more resources will be needed). For example, the pipeline manager 503 may determine that a device always has more resources available during a certain time at night, and little or no resources available during a certain time of day.

The pipeline manager 503 also considers the SLA requirements for these pipeline management decisions, including the overall pipeline SLA requirements and SLA requirements for specific actions in the pipeline (e.g., model execution/accuracy).

Based on these considerations, the pipeline manager 503 requests support from other devices with available capacity to perform certain parts of the pipeline. The request may specify requirements associated with the portion of the pipeline being offloaded, including SLA requirements for specific actions and/or the overall pipeline SLA.

The pipeline requirements may also include criteria for morphing and/or adjusting the performance of the pipeline at runtime, such as by leveraging complexity reduction to enable some or all of the pipeline to run on resource-constrained devices (e.g., using alternative models with less complexity, lower accuracy, lower-precision arithmetic, and/or lower input/video resolutions). Similarly, the pipeline morphing criteria may also enable the complexity and accuracy of the pipeline to be increased in some situations (e.g., when resource availability is high and/or certain high-performance or special-purpose resources become available).

To identify the specific pipeline and actions that a node is seeking to offload, the request from the node may include the following information:
(i) pipeline_id: an identifier to represent or identify a specific pipeline with a certain structure. For example, each pipeline has a defined sequence of models/function calls, which is represented or otherwise identified by the pipeline_id.
(ii) pipeline_offload_actions: a representation of the actions in the pipeline that need to be offloaded/executed. In some embodiments, this may be represented with a vector or matrix whose elements correspond to the models/functions in the pipeline and have values indicating whether each model/function is activated or deactivated (e.g., using 1 for active and 0 for deactive). For example, the vector [1,0,0] may represent a simple sequential pipeline with three models, where only the first model is active and needs to be processed. A matrix can be used for pipelines that requires branches.

The pipeline manager 503 is also responsible for responding to other pipeline managers on processing requests. The responding nodes will be those having the pipeline definition and the corresponding models.

In addition, the edge server 502d includes a training module 507, which is continuously receiving telemetry data from the cameras and the metadata generated by the pipelines in order to proactively predict when/how to distribute a pipeline. In this manner, the pipeline proactively adapts to anticipated changes in the pipeline context instead of merely reacting to those changes, which reduces the risk of a device becoming overloaded due to a late reaction. In various embodiments, for example, the training module 507 may use the telemetry data to train a model to generate predictions relating to pipeline context and/or pipeline management using any suitable type or combination of predictive analytics or modeling, including any of the following forms of artificial intelligence, machine learning, pattern recognition, and/or statistical analysis: an artificial neural network (ANN), such as a recurrent neural network (RNN) (e.g., a long short-term memory (LSTM) network or RNN); a moving average model; an autoregressive moving average (ARMA) or autoregressive integrated moving average (ARIMA) model; an exponential smoothing model; and/or a regression analysis model.

As a high-level description of the flow, when a compute node (e.g., smart camera 502a in the illustrated example) detects that it needs help with the pipeline processing, it advertises a request to process certain parts of the pipeline (or the full pipeline) based on a set of requirements (step 1). The other compute nodes in the network (e.g., smart cameras 502b-c and/or edge server 502d in the illustrated example) respond with what they can do to help offload the processing assuming they are able to satisfy the requirements specified in the request (steps 2a-b). Finally, the respective pipeline managers 503 on the nodes 502a-d collectively select the best responding node(s) based on various considerations, including their resource availability and the latency between the nodes.

At this point, a new connection is made between the nodes to share the video stream and any generated metadata (step 3). For example, as described above in connection with FIG. 4B, smart camera 402b acts as the client of smart camera 402a to get the video feed and any already processed metadata.

In some embodiments, the metadata generated by a node may include the following fields:
(i) time: The time when the node performed the processing to generate the metadata.
(ii) pipeline_id: The identifier of the pipeline that the metadata was generated for.
(iii) pipeline_state: A representation of the current state of the pipeline on the node when performing the processing to generate the metadata. This may be represented with a similar vector/matrix as discussed above for the pipeload_offload_actions field of the initial offload request.
(iv) pipeline_output: The output generated by the models/actions performed by the node (e.g., the regions-of-interest (Rols) output by a face detection model).

The video feed may be sent to the edge server 502d when there are audit requirements involved, or it may only be sent to processing nodes that are involved in performing parts of the AI pipeline. When the pipeline is complete, the edge server 502d receives/collects the results/metadata generated by the respective nodes 502a-d that participated in the pipeline processing.

In some embodiments, for purposes of deciding which of the nodes is the best candidate for an offload request, the pipeline managers 503 running on each of the cameras 502a-c will negotiate among each other. In order to increase the resiliency and scalability, peer-to-peer communications can be implemented using a Gossip-style protocol, and the election of the compute node that will execute the further processing request can be achieved using a Paxos-style protocol for solving consensus between the compute nodes.

As an example scenario, consider the conditions depicted in FIG. 5. Each camera 502a-c has a pipeline manager 503 running on it, and the edge server 502d also has an instance of the pipeline manager 503 that acts as a peer of the pipeline managers 503 on the cameras 502a-c. In general, to be reliable and scalable, every compute node 502a-d acts as a peer of the other nodes to avoid a centralized point of failure.

In the illustrated example, the pipeline manager 503 in camera 502a advertises the processing request using the Gossip-style protocol for the dissemination of the message in the peer-to-peer network. The dissemination of the message can be restricted by a Time to Live (TTL) parameter, or with the usage of Broadcast Domains. For example, a group of nearby cameras can form a Broadcast Domain, and they will only disseminate the message between them. In some cases, the server may be added to every broadcast domain by default to guarantee that it always receives the messages for audit purposes. After a set of rounds of dissemination, the leader election phase starts, with the leader being the compute node 502a-d (e.g., camera or server) that will carry on with the processing. For selecting the leader in the peer-to-peer network, a Paxos-style protocol can be used.

In the proposed example, smart cameras 502b-c and the edge server 502d act as proposers, communicating their compute capabilities and other relevant characteristics as metrics for the leader election protocol, and based on these characteristics, one of the compute nodes 502b-d is elected as the leader to continue processing. In some cases, the protocol may favor proposers other than the edge server-such as smart cameras or other edge devices-by giving less priority to the capabilities in the edge server and falling back to the server only when no smart cameras are available. Once the leader is elected, it requests the necessary information to execute the computation step.

Once the distributed pipeline is completed, the results can be also communicated into a peer-to-peer style, guaranteed by the protocol that the results messages will eventually reach the edge server 502d (and other edge servers in case the nearest preferred server is out of service for some reason).

If the requirements cannot be met (e.g., SLA requirements) using one or a combination of other devices, the default option is to send the data to the server, which has enough resources even though the intention is to keep it as free as possible.

In scenarios where there is a significant increase in resource utilization, the system may choose to allow less accuracy, using a different set of models implemented with different levels of arithmetic precision (e.g., int8, FP16, FP32, etc.), reduced frame resolutions, and so forth. For example, in some cases when resources are low, a neural network with 86% accuracy may be used for detection instead of one with 95% accuracy. In this manner, a pipeline may morph, adapting to use different models available on the devices. Once that decision is made, the definition of the pipelines is distributed to all nodes processing this type of pipelines.

Moreover, because the pipeline managers 503 are continuously monitoring the runtime context/status of the pipeline, the pipeline may be redistributed among the nodes 502a-d periodically (e.g., based on changes to the actual or predicted resource availability and compute requirements).

All the telemetry and decisions made (e.g., distribution decisions) are received on the edge server 502d. This allows the training module 507 on the server 502d to learn by finding patterns and proactively recommending to the pipeline managers 503 when they should adapt the distributed pipeline. For example, if numerous people are frequently in the field of view of a particular camera 502a-c every day from 2-5pm, the training/learning module 507 may recommend to the pipeline manager 503 on that camera 502a-c to adapt its pipeline by deactivating one of the local functions on the camera and instead process it on the server 502d.

In some cases, the pipeline manager 502 of a camera 502a-c may even be able to stop video transmission altogether when no object is being captured, thus completely reducing bandwidth utilization. This may depend on audit requirements, although in some cases there may be a local storage for such video segments, allowing them to be transmitted in batches and/or on-demand.

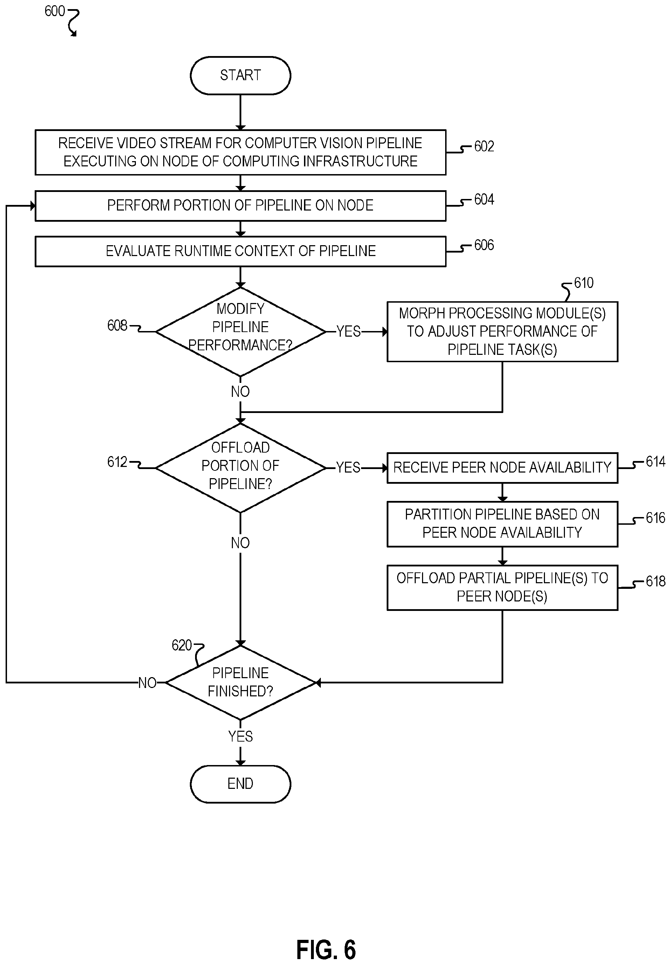

**FIG. 6** illustrates a flowchart 600 for processing a video stream through a morphing computer vision (CV) pipeline in accordance with certain embodiments. In various embodiments, flowchart 600 may be performed by and/or implemented using the computing devices, platforms, and systems described throughout this disclosure.

In some embodiments, for example, flowchart 600 may be performed by and/or implemented using a compute device, platform, or system that implements a node of a computing infrastructure for executing a computer vision (CV) pipeline.

The computing infrastructure may be a distributed computing infrastructure that includes a plurality of compute devices or nodes, such as smart cameras, edge server appliances, cloud server appliances, etc. The smart cameras may include or maybe used as part of security cameras and surveillance systems, smart city deployments, smart doorbells, smart appliances, mobile phones, autonomous vehicles, robots, and so forth. Each compute device in the infrastructure may include some combination of interface circuitry (e.g., I/O interfaces and circuitry, communication circuitry, network interface circuitry), and processing/acceleration circuitry (e.g., processors, cores, central processing units (CPUs), graphics processing units (GPUs), vision processing units (VPUs), FPGA/ASIC accelerators) to perform/accelerate the tasks in the CV pipeline, such as machine learning (ML) inference tasks.

The flowchart begins at block 602, where a node of the computing infrastructure (e.g., a smart camera) captures and/or receives a video stream to be processed through the CV pipeline.

The CV pipeline may include a sequence of tasks to be performed on the video stream, which may be implemented by a collection of processing modules. For example, each task may be implemented by a corresponding processing module (or set of modules). Moreover, in some cases, a single task may be independently implemented by multiple processing modules that provide varying performance levels, characteristics, and/or tradeoffs.

Examples of the tasks that may be performed by a CV pipeline include video encoding/decoding, preprocessing (e.g., resizing, cropping, scaling), feature detection/extraction, object detection/tracking, object identification, facial recognition, event detection, scene recognition, motion estimation, pose estimation, and camera/sensor fusion, among numerous other examples. Moreover, the tasks, processing modules, and/or models used by the CV pipeline maybe implemented using any suitable visual processing, artificial intelligence, and/or machine learning techniques, including convolutional neural networks

(CNNs) (e.g., Inception/ResNet CNN architectures) and other deep learning neural networks or feed-forward artificial neural networks, pattern recognition, scale-invariant feature transform (SIFT), principal component analysis (PCA), discrete cosine transforms (DCT), and so forth.

The flowchart then proceeds to block 604 to perform a portion of the pipeline on the node. For example, the node may perform one or more initial tasks in the pipeline, such as decoding/preprocessing, object detection, etc. Object detection may be a machine learning (ML) inference task that leverages a trained ML model to detect objects in the video. Moreover, in some embodiments, accelerator circuitry on the node may be used to accelerate object detection and other ML inference tasks.

The flowchart then proceeds to block 606 to determine and/or evaluate a runtime context of the CV pipeline. The runtime context of the CV pipeline may include: the available compute capacity on the node (or on other nodes in the infrastructure); the required compute capacity to process one or more types of video content in the video stream through the CV pipeline; and/or one or more performance objectives associated with the CV pipeline or the computing infrastructure.

The runtime context of the CV pipeline can include both the actual runtime context at the current time and/or a predicted runtime context of the pipeline at a future time. For example, the predicted runtime context may be predicted using a machine learning (ML) model trained to predict future runtime contexts of the CV pipeline based on past runtime contexts of the CV pipeline.

The performance objectives may include performance objectives/requirements specified in a service level agreement (SLA) for the CV pipeline, performance objectives/requirements associated with the computing infrastructure (e.g., minimizing a load on edge server appliances in the infrastructure), and so forth.

The flowchart then proceeds to block 608 to determine whether to modify or adjust the performance of the pipeline based on the runtime context. In some cases, for example, the SLA/performance objectives may allow the pipeline to be dynamically morphed to adjust the performance of the pipeline or certain tasks of the pipeline based on the runtime context. For example, when resource availability is low, the pipeline may be morphed to reduce the performance of certain tasks and decrease their processing requirements. Similarly, when resource availability is high, the pipeline may be morphed to increase the performance of certain tasks.

If the pipeline performance does not need to be modified or adjusted based on the runtime context, the flowchart proceeds to block 612, as described further below.

If the pipeline performance does need to be modified or adjusted based on the runtime context, however, the flowchart proceeds to block 610 to morph the processing module(s) for certain pipeline task(s) to adjust their performance. In some cases, for example, a machine learning (ML) processing module may be morphed to adjust the performance of an ML inference task in the CV pipeline that is used to infer the type of video content captured in the video stream. In particular, the ML processing module initially implements the ML inference task based on a first ML model, but the ML processing module is morphed to replace the first ML model with a second ML model having different performance characteristics.

The flowchart then proceeds to block 612 to determine whether to offload a portion of the pipeline to other peer nodes in the computing infrastructure based on the runtime context. For example, if the compute requirements of the pipeline exceed the current resource availability on the node, that node may decide to offload some or all of the pipeline to peer nodes. The node may also consider the predicted runtime context of the CV pipeline as part of the decision. For example, in some embodiments, the node may receive a recommendation (e.g., from an edge server or other server/resource) to offload a portion of the pipeline based on the predicted runtime context of the CV pipeline at the future time.

If the pipeline does not need to be offloaded based on the runtime context, the flowchart proceeds to block 620, as described further below.

If a portion of the pipeline does need to be offloaded based on the runtime context, however, the flowchart proceeds to block 614 to receive (e.g., via interface circuitry and/or over a network) a peer node availability of other peer nodes in the computing infrastructure for performing/offloading a portion of the pipeline.

In some embodiments, for example, the node currently executing the pipeline may send a request to its peer nodes indicating the particular task(s) of the pipeline that need to be offloaded, along with any applicable performance objectives, constraints, or requirements for performing those task(s) (e.g., as specified in an SLA), and the peer nodes may respond with their availability for performing those task(s). For example, each peer node may indicate which tasks it is available to perform from the portion of the pipeline being offloaded.

The flowchart then proceeds to block 616 to partition the portion of the pipeline being offloaded into one or more partial pipeline(s) based on the peer node availability. For example, the peer node availability may be used to select which peer nodes to offload the pipeline to, and determine which tasks from the pipeline to offload to each of the selected peer nodes. The portion of the pipeline being offloaded can then be partitioned into one or more partial CV pipelines to be offloaded to the subset of peer node(s) that were chosen. For example, each partial CV pipeline may contain a subset of tasks from the portion of the CV pipeline being offloaded for one of the peer nodes.

The flowchart then proceeds to block 618 to offload the partial pipeline(s) to the corresponding peer node(s) (e.g., via interface circuitry and/or over a network).

The flowchart then proceeds to block 620 to determine if the pipeline processing is finished. For example, if all tasks in the pipeline have been performed on the portion, segment, or frame(s) of the video stream that are currently being processed (e.g., whether performed directly by the current node or offloaded to peer nodes), the pipeline processing may be finished.

If the pipeline processing is not finished, however, the flowchart proceeds back to block 604 to continue performing, morphing, and/or offloading the remaining portions or tasks of the pipeline as appropriate-based on the runtime context-until the pipeline processing is finished.

Once the pipeline processing is finished, the flowchart may be complete. In some embodiments, however, the flowchart may restart and/or certain blocks may be repeated. For example, in some embodiments, the flowchart may restart at block 602 to continue receiving and processing additional portions of the same video stream or another video stream altogether.

### Computing Embodiments

The following section presents examples of computing devices, platforms, systems, and environments that may be used to implement the computer vision pipeline solution described throughout this disclosure.

### Edge Computing Embodiments

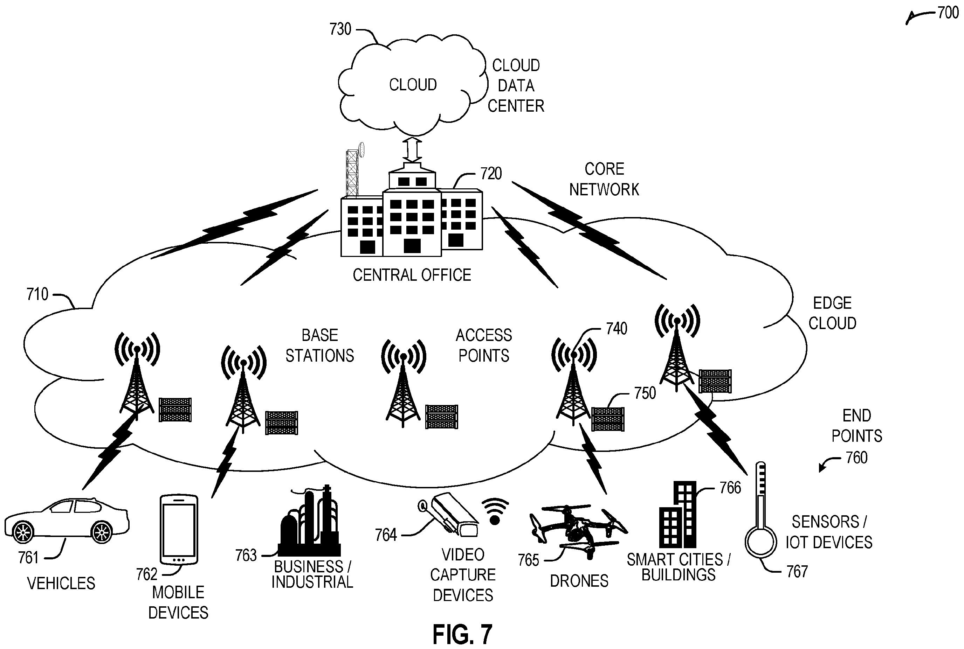

FIG. 7 is a block diagram 700 showing an overview of a configuration for edge computing, which includes a layer of processing referred to in many of the following examples as an "edge cloud". As shown, the edge cloud 710 is co-located at an edge location, such as an access point or base station 740, a local processing hub 750, or a central office 720, and thus may include multiple entities, devices, and equipment instances. The edge cloud 710 is located much closer to the endpoint (consumer and producer) data sources 760 (e.g., autonomous vehicles 761, user equipment 762, business and industrial equipment 763, video capture devices 764, drones 765, smart cities and building devices 766, sensors and loT devices 767, etc.) than the cloud data center 730. Compute, memory, and storage resources which are offered at the edges in the edge cloud 710 are critical to providing ultra-low latency response times for services and functions used by the endpoint data sources 760 as well as reduce network backhaul traffic from the edge cloud 710 toward cloud data center 730 thus improving energy consumption and overall network usages among other benefits.

Compute, memory, and storage are scarce resources, and generally decrease depending on the edge location (e.g., fewer processing resources being available at consumer endpoint devices, than at a base station, than at a central office). However, the closer that the edge location is to the endpoint (e.g., user equipment (UE)), the more that space and power is often constrained. Thus, edge computing attempts to reduce the amount of resources needed for network services, through the distribution of more resources which are located closer both geographically and in network access time. In this manner, edge computing attempts to bring the compute resources to the workload data where appropriate, or, bring the workload data to the compute resources.

The following describes aspects of an edge cloud architecture that covers multiple potential deployments and addresses restrictions that some network operators or service providers may have in their own infrastructures. These include, variation of configurations based on the edge location (because edges at a base station level, for instance, may have more constrained performance and capabilities in a multi-tenant scenario); configurations based on the type of compute, memory, storage, fabric, acceleration, or like resources available to edge locations, tiers of locations, or groups of locations; the service, security, and management and orchestration capabilities; and related objectives to achieve usability and performance of end services. These deployments may accomplish processing in network layers that may be considered as "near edge", "close edge", "local edge", "middle edge", or "far edge" layers, depending on latency, distance, and timing characteristics.

Edge computing is a developing paradigm where computing is performed at or closer to the "edge" of a network, typically through the use of a compute platform (e.g., x86 or ARM compute hardware architecture) implemented at base stations, gateways, network routers, or other devices which are much closer to endpoint devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

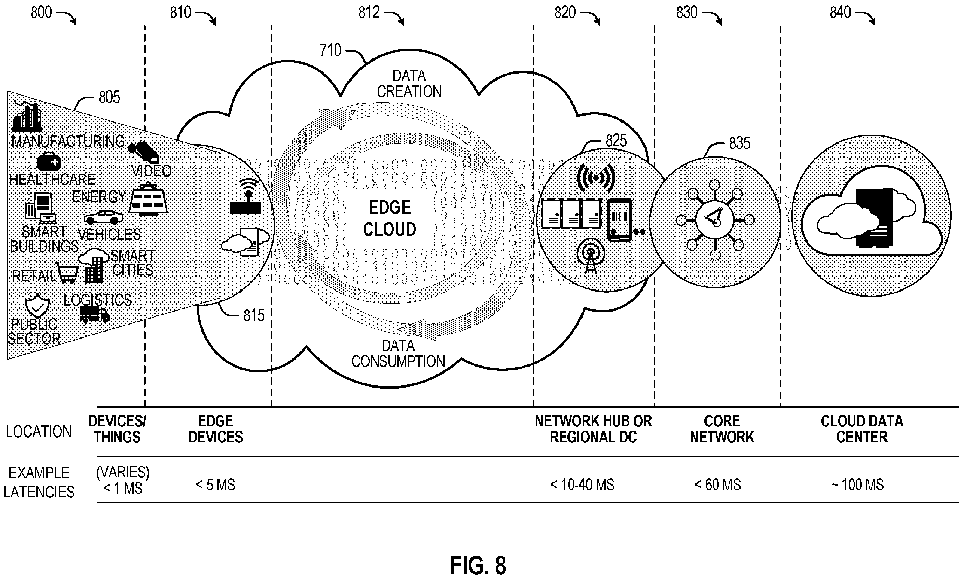

FIG. 8 illustrates operational layers among endpoints, an edge cloud, and cloud computing environments. Specifically, FIG. 8 depicts examples of computational use cases 805, utilizing the edge cloud 710 among multiple illustrative layers of network computing. The layers begin at an endpoint (devices and things) layer 800, which accesses the edge cloud 710 to conduct data creation, analysis, and data consumption activities. The edge cloud 710 may span multiple network layers, such as an edge devices layer 810 having gateways, on-premise servers, or network equipment (nodes 815) located in physically proximate edge systems; a network access layer 820, encompassing base stations, radio processing units, network hubs, regional data centers (DC), or local network equipment (equipment 825); and any equipment, devices, or nodes located therebetween (in layer 812, not illustrated in detail). The network communications within the edge cloud 710 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 800, under 5 ms at the edge devices layer 810, to even between 10 to 40 ms when communicating with nodes at the network access layer 820. Beyond the edge cloud 710 are core network 830 and cloud data center 840 layers, each with increasing latency (e.g., between 50-60 ms at the core network layer 830, to 100 or more ms at the cloud data center layer). As a result, operations at a core network data center 835 or a cloud data center 845, with latencies of at least 50 to 100 ms or more, will not be able to accomplish many time-critical functions of the use cases 805. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 835 or a cloud data center 845, a central office or content data network may be considered as being located within a "near edge" layer ("near" to the cloud, having high latency values when communicating with the devices and endpoints of the use cases 805), whereas an access point, base station, on-premise server, or network gateway may be considered as located within a "far edge" layer ("far" from the cloud, having low latency values when communicating with the devices and endpoints of the use cases 805). It will be understood that other categorizations of a particular network layer as constituting a "close", "local", "near", "middle", or "far" edge may be based on latency, distance, number of network hops, or other measurable characteristics, as measured from a source in any of the network layers 800-840.

The various use cases 805 may access resources under usage pressure from incoming streams, due to multiple services utilizing the edge cloud. To achieve results with low latency, the services executed within the edge cloud 710 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement steps to remediate.

Thus, with these variations and service features in mind, edge computing within the edge cloud 710 may provide the ability to serve and respond to multiple applications of the use cases 805 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), standard processes, etc.), which cannot leverage conventional cloud computing due to latency or other limitations.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required, because edge locations may be unmanned and may even need permissioned access (e.g., when housed in a third-party location). Such issues are magnified in the edge cloud 710 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 710 (network layers 800-840), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 710.

As such, the edge cloud 710 is formed from network components and functional features operated by and within edge gateway nodes, edge aggregation nodes, or other edge compute nodes among network layers 810-830. The edge cloud 710 thus may be embodied as any type of network that provides edge computing and/or storage resources which are proximately located to radio access network (RAN) capable endpoint devices (e.g., mobile computing devices, loT devices, smart devices, etc.), which are discussed herein. In other words, the edge cloud 710 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

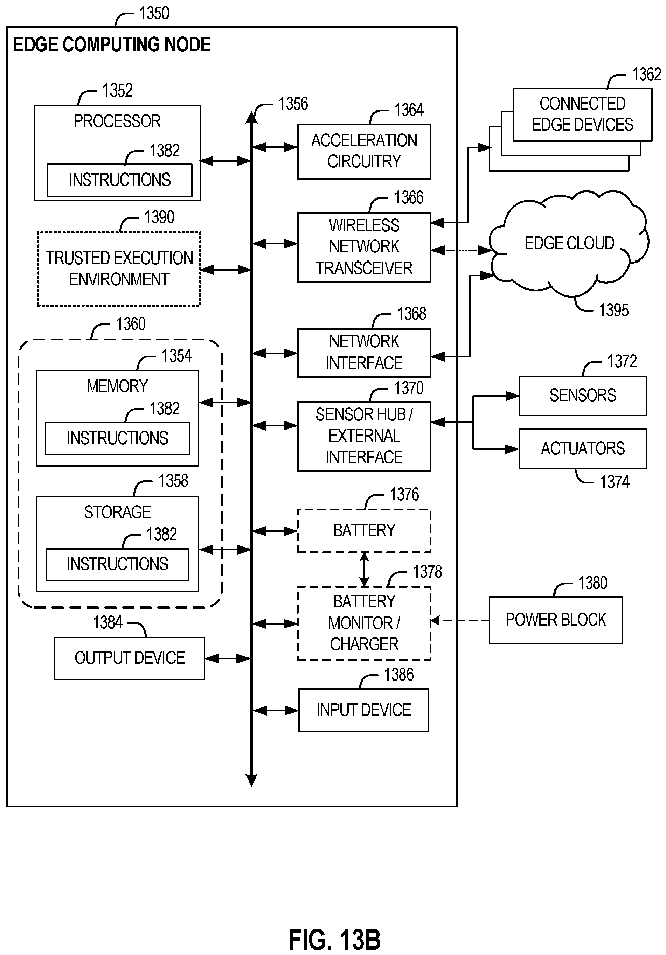

The network components of the edge cloud 710 may be servers, multi-tenant servers, appliance computing devices, and/or any other type of computing devices. For example, the edge cloud 710 may include an appliance computing device that is a self-contained electronic device including a housing, a chassis, a case or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., EMI, vibration, extreme temperatures), and/or enable submergibility. Example housings may include power circuitry to provide power for stationary and/or portable implementations, such as AC power inputs, DC power inputs, AC/DC or DC/AC converter(s), power regulators, transformers, charging circuitry, batteries, wired inputs and/or wireless power inputs. Example housings and/or surfaces thereof may include or connect to mounting hardware to enable attachment to structures such as buildings, telecommunication structures (e.g., poles, antenna structures, etc.) and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, propellers, etc.) and/or articulating hardware (e.g., robot arms, pivotable appendages, etc.). In some circumstances, the sensors may include any type of input devices such as user interface hardware (e.g., buttons, switches, dials, sliders, etc.). In some circumstances, example housings include output devices contained in, carried by, embedded therein and/or attached thereto. Output devices may include displays, touchscreens, lights, LEDs, speakers, I/O ports (e.g., USB), etc. In some circumstances, edge devices are devices presented in the network for a specific purpose (e.g., a traffic light), but may have processing and/or other capacities that may be utilized for other purposes. Such edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 13B. The edge cloud 710 may also include one or more servers and/or one or more multi-tenant servers. Such a server may include an operating system and implement a virtual computing environment. A virtual computing environment may include a hypervisor managing (e.g., spawning, deploying, destroying, etc.) one or more virtual machines, one or more containers, etc. Such virtual computing environments provide an execution environment in which one or more applications and/or other software, code or scripts may execute while being isolated from one or more other applications, software, code or scripts.

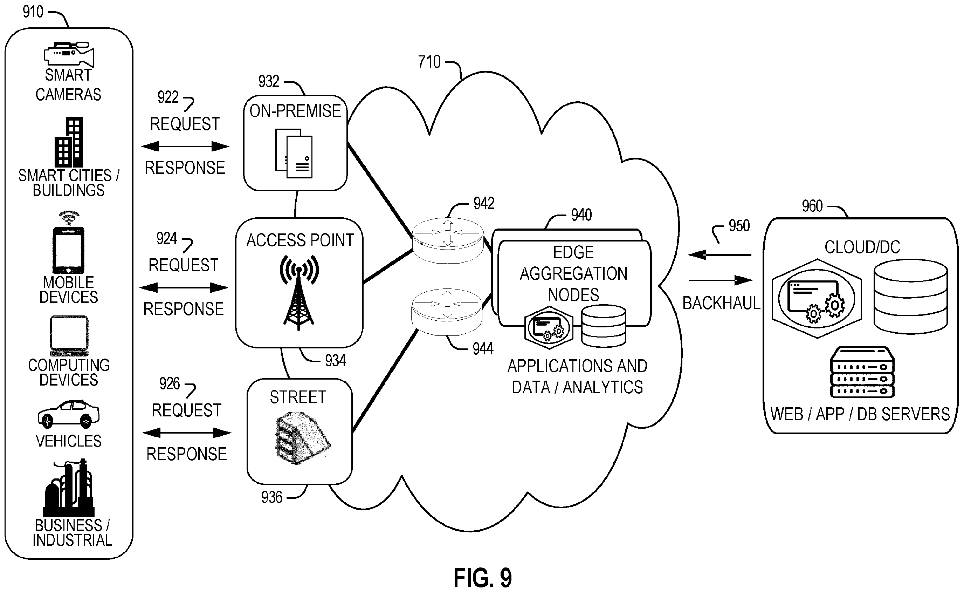

In FIG. 9, various client endpoints 910 (in the form of smart cameras, mobile devices, computers, autonomous vehicles, business computing equipment, industrial processing equipment) exchange requests and responses that are specific to the type of endpoint network aggregation. For instance, client endpoints 910 may obtain network access via a wired broadband network, by exchanging requests and responses 922 through an on-premise network system 932. Some client endpoints 910, such as smart cameras, may obtain network access via a wireless broadband network, by exchanging requests and responses 924 through an access point (e.g., cellular network tower) 934. Some client endpoints 910, such as autonomous vehicles may obtain network access for requests and responses 926 via a wireless vehicular network through a street-located network system 936. However, regardless of the type of network access, the TSP may deploy aggregation points 942, 944 within the edge cloud 710 to aggregate traffic and requests. Thus, within the edge cloud 710, the TSP may deploy various compute and storage resources, such as at edge aggregation nodes 940, to provide requested content. The edge aggregation nodes 940 and other systems of the edge cloud 710 are connected to a cloud or data center 960, which uses a backhaul network 950 to fulfill higher-latency requests from a cloud/data center for websites, applications, database servers, etc. Additional or consolidated instances of the edge aggregation nodes 940 and the aggregation points 942, 944, including those deployed on a single server framework, may also be present within the edge cloud 710 or other areas of the TSP infrastructure.

### Containers in Edge Computing

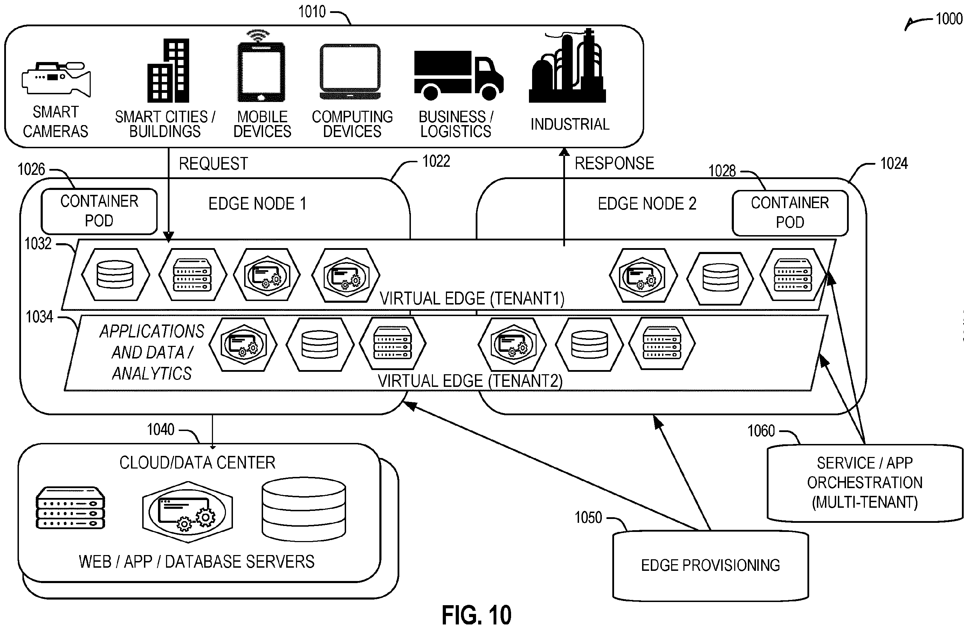

FIG. 10 illustrates deployment and orchestration for virtualized and container-based edge configurations across an edge computing system operated among multiple edge nodes and multiple tenants (e.g., users, providers) which use such edge nodes. Specifically, FIG. 10 depicts coordination of a first edge node 1022 and a second edge node 1024 in an edge computing system 1000, to fulfill requests and responses for various client endpoints 1010 (e.g., smart cameras, smart cities / building systems, mobile devices, computing devices, business/logistics systems, industrial systems, etc.), which access various virtual edge instances. Here, the virtual edge instances 1032, 1034 provide edge compute capabilities and processing in an edge cloud, with access to a cloud/data center 1040 for higher-latency requests for websites, applications, database servers, etc. However, the edge cloud enables coordination of processing among multiple edge nodes for multiple tenants or entities.

In the example of FIG. 10, these virtual edge instances include: a first virtual edge 1032, offered to a first tenant (Tenant 1), which offers a first combination of edge storage, computing, and services; and a second virtual edge 1034, offering a second combination of edge storage, computing, and services. The virtual edge instances 1032, 1034 are distributed among the edge nodes 1022, 1024, and may include scenarios in which a request and response are fulfilled from the same or different edge nodes. The configuration of the edge nodes 1022, 1024 to operate in a distributed yet coordinated fashion occurs based on edge provisioning functions 1050. The functionality of the edge nodes 1022, 1024 to provide coordinated operation for applications and services, among multiple tenants, occurs based on orchestration functions 1060.

It should be understood that some of the devices in 1010 are multi-tenant devices where Tenant 1 may function within a tenant1 'slice' while a Tenant 2 may function within a tenant2 slice (and, in further examples, additional or sub-tenants may exist; and each tenant may even be specifically entitled and transactionally tied to a specific set of features all the way day to specific hardware features). A trusted multi-tenant device may further contain a tenant specific cryptographic key such that the combination of key and slice may be considered a "root of trust" (RoT) or tenant specific RoT. A RoT may further be computed dynamically composed using a DICE (Device Identity Composition Engine) architecture such that a single DICE hardware building block may be used to construct layered trusted computing base contexts for layering of device capabilities (such as a Field Programmable Gate Array (FPGA)). The RoT may further be used for a trusted computing context to enable a "fan-out" that is useful for supporting multi-tenancy. Within a multi-tenant environment, the respective edge nodes 1022, 1024 may operate as security feature enforcement points for local resources allocated to multiple tenants per node. Additionally, tenant runtime and application execution (e.g., in instances 1032, 1034) may serve as an enforcement point for a security feature that creates a virtual edge abstraction of resources spanning potentially multiple physical hosting platforms. Finally, the orchestration functions 1060 at an orchestration entity may operate as a security feature enforcement point for marshalling resources along tenant boundaries.

Edge computing nodes may partition resources (memory, central processing unit (CPU), graphics processing unit (GPU), interrupt controller, input/output (I/O) controller, memory controller, bus controller, etc.) where respective partitionings may contain a RoT capability and where fan-out and layering according to a DICE model may further be applied to Edge Nodes. Cloud computing nodes often use containers, FaaS engines, Servlets, servers, or other computation abstraction that may be partitioned according to a DICE layering and fan-out structure to support a RoT context for each. Accordingly, the respective RoTs spanning devices 1010, 1022, and 1040 may coordinate the establishment of a distributed trusted computing base (DTCB) such that a tenant-specific virtual trusted secure channel linking all elements end to end can be established.

Further, it will be understood that a container may have data or workload specific keys protecting its content from a previous edge node. As part of migration of a container, a pod controller at a source edge node may obtain a migration key from a target edge node pod controller where the migration key is used to wrap the container-specific keys. When the container/pod is migrated to the target edge node, the unwrapping key is exposed to the pod controller that then decrypts the wrapped keys. The keys may now be used to perform operations on container specific data. The migration functions may be gated by properly attested edge nodes and pod managers (as described above).

In further examples, an edge computing system is extended to provide for orchestration of multiple applications through the use of containers (a contained, deployable unit of software that provides code and needed dependencies) in a multi-owner, multi-tenant environment. A multi-tenant orchestrator may be used to perform key management, trust anchor management, and other security functions related to the provisioning and lifecycle of the trusted 'slice' concept in FIG. 10. For instance, an edge computing system may be configured to fulfill requests and responses for various client endpoints from multiple virtual edge instances (and, from a cloud or remote data center). The use of these virtual edge instances may support multiple tenants and multiple applications (e.g., augmented reality (AR)/virtual reality (VR), enterprise applications, content delivery, gaming, compute offload) simultaneously. Further, there may be multiple types of applications within the virtual edge instances (e.g., normal applications; latency sensitive applications; latency-critical applications; user plane applications; networking applications; etc.). The virtual edge instances may also be spanned across systems of multiple owners at different geographic locations (or, respective computing systems and resources which are co-owned or co-managed by multiple owners).

For instance, each edge node 1022, 1024 may implement the use of containers, such as with the use of a container "pod" 1026, 1028 providing a group of one or more containers. In a setting that uses one or more container pods, a pod controller or orchestrator is responsible for local control and orchestration of the containers in the pod. Various edge node resources (e.g., storage, compute, services, depicted with hexagons) provided for the respective edge slices 1032, 1034 are partitioned according to the needs of each container.

With the use of container pods, a pod controller oversees the partitioning and allocation of containers and resources. The pod controller receives instructions from an orchestrator (e.g., orchestrator 1060) that instructs the controller on how best to partition physical resources and for what duration, such as by receiving key performance indicator (KPI) targets based on SLA contracts. The pod controller determines which container requires which resources and for how long in order to complete the workload and satisfy the SLA. The pod controller also manages container lifecycle operations such as: creating the container, provisioning it with resources and applications, coordinating intermediate results between multiple containers working on a distributed application together, dismantling containers when workload completes, and the like. Additionally, a pod controller may serve a security role that prevents assignment of resources until the right tenant authenticates or prevents provisioning of data or a workload to a container until an attestation result is satisfied.

Also, with the use of container pods, tenant boundaries can still exist but in the context of each pod of containers. If each tenant specific pod has a tenant specific pod controller, there will be a shared pod controller that consolidates resource allocation requests to avoid typical resource starvation situations. Further controls may be provided to ensure attestation and trustworthiness of the pod and pod controller. For instance, the orchestrator 1060 may provision an attestation verification policy to local pod controllers that perform attestation verification. If an attestation satisfies a policy for a first tenant pod controller but not a second tenant pod controller, then the second pod could be migrated to a different edge node that does satisfy it. Alternatively, the first pod may be allowed to execute and a different shared pod controller is installed and invoked prior to the second pod executing.

### Mobility and Multi-Access Edge Computing

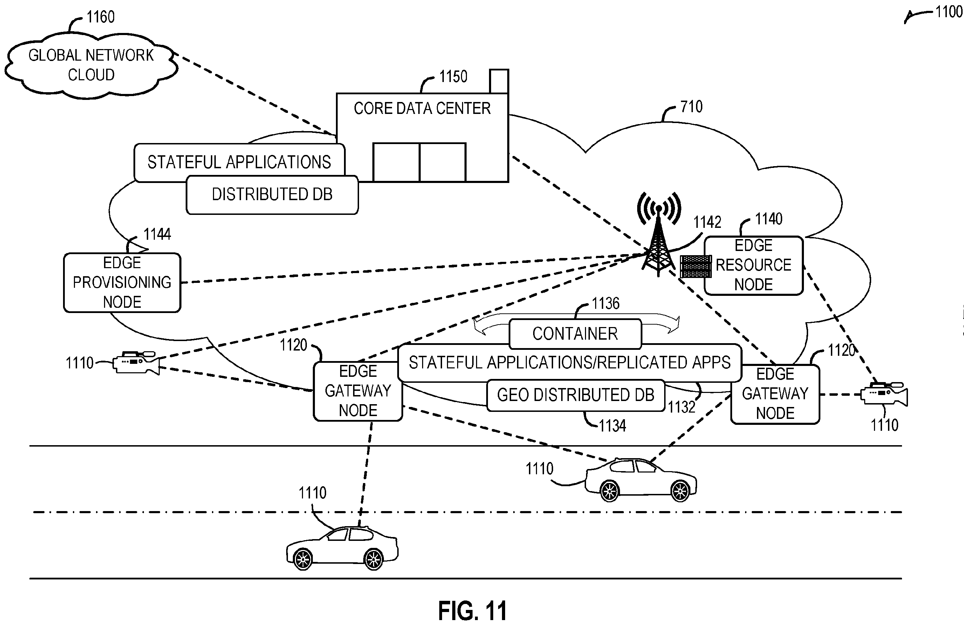

It should be appreciated that the edge computing systems and arrangements discussed herein may be applicable in various solutions, services, and/or use cases involving mobility. As an example, FIG. 11 shows a simplified vehicle compute and communication use case involving mobile access to applications in an edge computing system 1100 that implements an edge cloud 710.

In this use case, the client compute nodes 1110 may be embodied as in-vehicle compute systems (e.g., in-vehicle navigation and/or infotainment systems) located in corresponding vehicles which communicate with the edge gateway nodes 1120 during traversal of a roadway. The respective client compute nodes 1110 may also be embodied as smart cameras mounted on, attached to, or integrated with structures having other separate mechanical utility that are located in proximity to the roadway (e.g., along the roadway, at intersections of the roadway, or other locations near the roadway), such as roadside infrastructure (e.g., street poles for streetlights or traffic lights, roadside signage, bridges), buildings, billboards, cell towers, and so forth. The client compute nodes 1110 may include an amount of processing and storage capabilities and, as such, they may perform some processing and/or storage of data themselves (e.g., processing/storage of video data captured by the smart cameras 1110). The client compute nodes 1110 may also include communication capabilities to communicate with the edge gateway nodes 1120 and/or edge resource nodes 1140.

For instance, the edge gateway nodes 1120 may be located in a roadside cabinet or other enclosure (e.g., a roadside unit (RSU)) built into a structure having other, separate, mechanical utility, which may be placed along the roadway, at intersections of the roadway, or other locations near the roadway. As respective vehicles traverse along the roadway, the connection between its client compute node 1110 and a particular edge gateway device 1120 may propagate so as to maintain a consistent connection and context for the client compute node 1110. Likewise, mobile edge nodes may aggregate at the high priority services or according to the throughput or latency resolution requirements for the underlying service(s) (e.g., in the case of drones). The respective edge gateway devices 1120 include an amount of processing and storage capabilities and, as such, some processing and/or storage of data for the client compute nodes 1110 may be performed on one or more of the edge gateway devices 1120.

The edge gateway devices 1120 may communicate with one or more edge resource nodes 1140, which are illustratively embodied as compute servers, appliances or components located at or in a communication base station 1142 (e.g., a base station of a cellular network). As discussed above, the respective edge resource nodes 1140 include an amount of processing and storage capabilities and, as such, some processing and/or storage of data for the client compute nodes 1110 may be performed on the edge resource node 1140. For example, the processing of data that is less urgent or important may be performed by the edge resource node 1140, while the processing of data that is of a higher urgency or importance may be performed by the edge gateway devices 1120 (depending on, for example, the capabilities of each component, or information in the request indicating urgency or importance). Based on data access, data location or latency, work may continue on edge resource nodes when the processing priorities change during the processing activity. Likewise, configurable systems or hardware resources themselves can be activated (e.g., through a local orchestrator) to provide additional resources to meet the new demand (e.g., adapt the compute resources to the workload data).

The edge resource node(s) 1140 also communicate with the core data center 1150, which may include compute servers, appliances, and/or other components located in a central location (e.g., a central office of a cellular communication network). The core data center 1150 may provide a gateway to the global network cloud 1160 (e.g., the Internet) for the edge cloud 710 operations formed by the edge resource node(s) 1140 and the edge gateway devices 1120. Additionally, in some examples, the core data center 1150 may include an amount of processing and storage capabilities and, as such, some processing and/or storage of data for the client compute devices may be performed on the core data center 1150 (e.g., processing of low urgency or importance, or high complexity).

The edge gateway nodes 1120 or the edge resource nodes 1140 may offer the use of stateful applications 1132 and a geographic distributed database 1134. Although the applications 1132 and database 1134 are illustrated as being horizontally distributed at a layer of the edge cloud 710, it will be understood that resources, services, or other components of the application may be vertically distributed throughout the edge cloud (including, part of the application executed at the client compute node 1110, other parts at the edge gateway nodes 1120 or the edge resource nodes 1140, etc.). Additionally, as stated previously, there can be peer relationships at any level to meet service objectives and obligations. Further, the data for a specific client or application can move from edge to edge based on changing conditions (e.g., based on acceleration resource availability, following the car movement, etc.). For instance, based on the "rate of decay" of access, prediction can be made to identify the next owner to continue, or when the data or computational access will no longer be viable. These and other services may be utilized to complete the work that is needed to keep the transaction compliant and lossless.

In further scenarios, a container 1136 (or pod of containers) may be flexibly migrated from an edge node 1120 to other edge nodes (e.g., 1120, 640, etc.) such that the container with an application and workload does not need to be reconstituted, re-compiled, re-interpreted in order for migration to work. However, in such settings, there may be some remedial or "swizzling" translation operations applied. For example, the physical hardware at node 1140 may differ from edge gateway node 1120 and therefore, the hardware abstraction layer (HAL) that makes up the bottom edge of the container will be re-mapped to the physical layer of the target edge node. This may involve some form of late-binding technique, such as binary translation of the HAL from the container native format to the physical hardware format, or may involve mapping interfaces and operations. A pod controller may be used to drive the interface mapping as part of the container lifecycle, which includes migration to/from different hardware environments.

The scenarios encompassed by FIG. 11 may utilize various types of mobile edge nodes, such as an edge node hosted in a vehicle (car/truck/tram/train) or other mobile unit, as the edge node will move to other geographic locations along the platform hosting it. With vehicle-to-vehicle communications, individual vehicles may even act as network edge nodes for other cars, (e.g., to perform caching, reporting, data aggregation, etc.). Thus, it will be understood that the application components provided in various edge nodes may be distributed in static or mobile settings, including coordination between some functions or operations at individual endpoint devices or the edge gateway nodes 1120, some others at the edge resource node 1140, and others in the core data center 1150 or global network cloud 1160.

In further configurations, the edge computing system may implement FaaS computing capabilities through the use of respective executable applications and functions. In an example, a developer writes function code (e.g., "computer code" herein) representing one or more computer functions, and the function code is uploaded to a FaaS platform provided by, for example, an edge node or data center. A trigger such as, for example, a service use case or an edge processing event, initiates the execution of the function code with the FaaS platform.

In an example of FaaS, a container is used to provide an environment in which function code (e.g., an application which may be provided by a third party) is executed. The container may be any isolated-execution entity such as a process, a Docker or Kubernetes container, a virtual machine, etc. Within the edge computing system, various datacenter, edge, and endpoint (including mobile) devices are used to "spin up" functions (e.g., activate and/or allocate function actions) that are scaled on demand. The function code gets executed on the physical infrastructure (e.g., edge computing node) device and underlying virtualized containers. Finally, container is "spun down" (e.g., deactivated and/or deallocated) on the infrastructure in response to the execution being completed.

Further aspects of FaaS may enable deployment of edge functions in a service fashion, including a support of respective functions that support edge computing as a service (Edge-as-a-Service or "EaaS"). Additional features of FaaS may include: a granular billing component that enables customers (e.g., computer code developers) to pay only when their code gets executed; common data storage to store data for reuse by one or more functions; orchestration and management among individual functions; function execution management, parallelism, and consolidation; management of container and function memory spaces; coordination of acceleration resources available for functions; and distribution of functions between containers (including "warm" containers, already deployed or operating, versus "cold" which require initialization, deployment, or configuration).

The edge computing system 1100 can include or be in communication with an edge provisioning node 1144. The edge provisioning node 1144 can distribute software such as the example computer readable instructions 1382 of FIG. 13B, to various receiving parties for implementing any of the methods described herein. The example edge provisioning node 1144 may be implemented by any computer server, home server, content delivery network, virtual server, software distribution system, central facility, storage device, storage node, data facility, cloud service, etc., capable of storing and/or transmitting software instructions (e.g., code, scripts, executable binaries, containers, packages, compressed files, and/or derivatives thereof) to other computing devices. Component(s) of the example edge provisioning node 644 may be located in a cloud, in a local area network, in an edge network, in a wide area network, on the Internet, and/or any other location communicatively coupled with the receiving party(ies). The receiving parties may be customers, clients, associates, users, etc. of the entity owning and/or operating the edge provisioning node 1144. For example, the entity that owns and/or operates the edge provisioning node 1144 may be a developer, a seller, and/or a licensor (or a customer and/or consumer thereof) of software instructions such as the example computer readable instructions 1382 of FIG. 13B. The receiving parties may be consumers, service providers, users, retailers, OEMs, etc., who purchase and/or license the software instructions for use and/or re-sale and/or sub-licensing.

In an example, edge provisioning node 1144 includes one or more servers and one or more storage devices. The storage devices host computer readable instructions such as the example computer readable instructions 1382 of FIG. 13B, as described below. Similarly to edge gateway devices 1120 described above, the one or more servers of the edge provisioning node 1144 are in communication with a base station 1142 or other network communication entity. In some examples, the one or more servers are responsive to requests to transmit the software instructions to a requesting party as part of a commercial transaction. Payment for the delivery, sale, and/or license of the software instructions may be handled by the one or more servers of the software distribution platform and/or via a third-party payment entity. The servers enable purchasers and/or licensors to download the computer readable instructions 1382 from the edge provisioning node 1144. For example, the software instructions, which may correspond to the example computer readable instructions 1382 of FIG. 13B, may be downloaded to the example processor platform/s, which is to execute the computer readable instructions 1382 to implement the methods described herein.

In some examples, the processor platform(s) that execute the computer readable instructions 1382 can be physically located in different geographic locations, legal jurisdictions, etc. In some examples, one or more servers of the edge provisioning node 1144 periodically offer, transmit, and/or force updates to the software instructions (e.g., the example computer readable instructions 1382 of FIG. 13B) to ensure improvements, patches, updates, etc. are distributed and applied to the software instructions implemented at the end user devices. In some examples, different components of the computer readable instructions 1382 can be distributed from different sources and/or to different processor platforms; for example, different libraries, plug-ins, components, and other types of compute modules, whether compiled or interpreted, can be distributed from different sources and/or to different processor platforms. For example, a portion of the software instructions (e.g., a script that is not, in itself, executable) may be distributed from a first source while an interpreter (capable of executing the script) may be distributed from a second source.

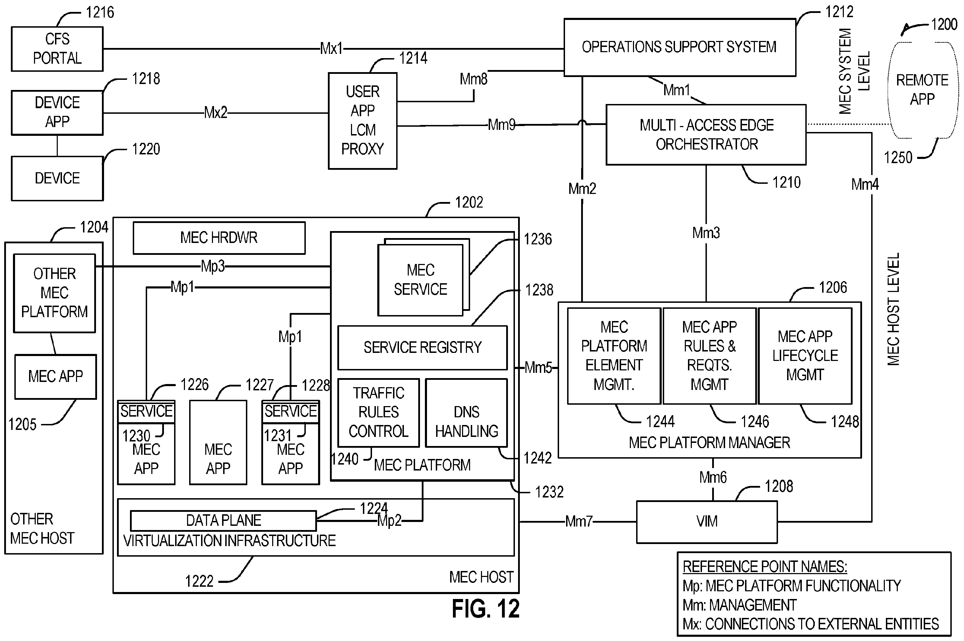

FIG. 12 illustrates a mobile edge system reference architecture (or MEC architecture) 1200, such as is indicated by ETSI MEC specifications. FIG. 12 specifically illustrates a MEC architecture 1200 with MEC hosts 1202 and 1204 providing functionalities in accordance with the ETSI GS MEC-003 specification. In some aspects, enhancements to the MEC platform 1232 and the MEC platform manager 1206 may be used for providing specific computing functions within the MEC architecture 1200 (e.g., deploying processing modules or tasks of computer vision pipelines on the virtualization infrastructure 1222 of MEC architecture 1200).

Referring to FIG. 12, the MEC network architecture 1200 can include MEC hosts 1202 and 1204, a virtualization infrastructure manager (VIM) 1208, an MEC platform manager 1206, an MEC orchestrator 1210, an operations support system 1212, a user app proxy 1214, a UE app 1218 running on UE 1220, and CFS portal 1216. The MEC host 1202 can include a MEC platform 1232 with filtering rules control component 1240, a DNS handling component 1242, a service registry 1238, and MEC services 1236. The MEC services 1236 can include at least one scheduler, which can be used to select resources for instantiating MEC apps (or NFVs) 1226, 1227, and 1228 upon virtualization infrastructure 1222. The MEC apps 1226 and 1228 can be configured to provide services 1230 and 1231, which can include processing network communications traffic of different types associated with one or more wireless connections (e.g., connections to one or more RAN or telecom-core network entities). The MEC app 1205 instantiated within MEC host 1204 can be similar to the MEC apps 1226-7728 instantiated within MEC host 1202. The virtualization infrastructure 1222 includes a data plane 1224 coupled to the MEC platform via an MP2 interface. Additional interfaces between various network entities of the MEC architecture 1200 are illustrated in FIG. 12.

The MEC platform manager 1206 can include MEC platform element management component 1244, MEC app rules and requirements management component 1246, and MEC app lifecycle management component 1248. The various entities within the MEC architecture 1200 can perform functionalities as disclosed by the ETSI GS MEC-003 specification.

In some aspects, the remote application (or app) 1250 is configured to communicate with the MEC host 1202 (e.g., with the MEC apps 1226-7728) via the MEC orchestrator 1210 and the MEC platform manager 1206.

### Computing Devices and Systems

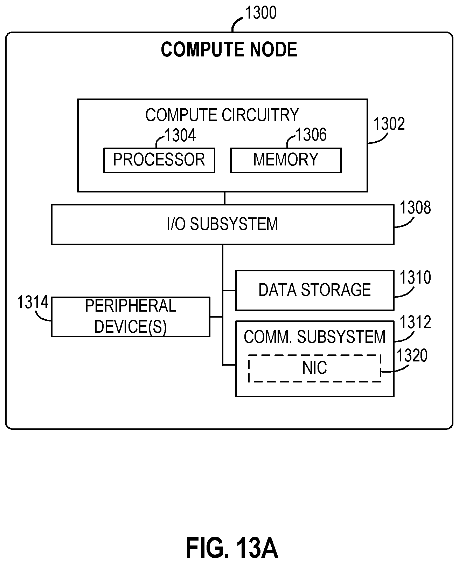

In further examples, any of the compute nodes or devices discussed with reference to the present edge computing systems and environment may be fulfilled based on the components depicted in FIGS. 13A and 13B. Respective edge compute nodes may be embodied as a type of device, appliance, computer, or other "thing" capable of communicating with other edge, networking, or endpoint components. For example, an edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

In the simplified example depicted in FIG. 13A, an edge compute node 1300 includes a compute engine (also referred to herein as "compute circuitry") 1302, an input/output (I/O) subsystem 1308, data storage 1310, a communication circuitry subsystem 1312, and, optionally, one or more peripheral devices 1314. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 1300 may be embodied as any type of engine, device, or collection of devices capable of performing various compute functions. In some examples, the compute node 1300 may be embodied as a single device such as an integrated circuit, an embedded system, a field-programmable gate array (FPGA), a system-on-a-chip (SOC), or other integrated system or device. In the illustrative example, the compute node 1300 includes or is embodied as a processor 1304 and a memory 1306. The processor 1304 may be embodied as any type of processor capable of performing the functions described herein (e.g., executing an application). For example, the processor 1304 may be embodied as a multi-core processor(s), a microcontroller, a processing unit, a specialized or special purpose processing unit, or other processor or processing/controlling circuit.

In some examples, the processor 1304 may be embodied as, include, or be coupled to an FPGA, an application specific integrated circuit (ASIC), reconfigurable hardware or hardware circuitry, or other specialized hardware to facilitate performance of the functions described herein. Also in some examples, the processor 704 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, or AI hardware (e.g., GPUs or programmed FPGAs). Such an xPU may be designed to receive programming to process one or more data streams and perform specific tasks and actions for the data streams (such as hosting microservices, performing service management or orchestration, organizing or managing server or data center hardware, managing service meshes, or collecting and distributing telemetry), outside of the CPU or general purpose processing hardware. However, it will be understood that a xPU, a SOC, a CPU, and other variations of the processor 1304 may work in coordination with each other to execute many types of operations and instructions within and on behalf of the compute node 1300.

The memory 1306 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device is a block addressable memory device, such as those based on NAND or NOR technologies. A memory device may also include a three dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the memory 1306 may be integrated into the processor 1304. The memory 1306 may store various software and data used during operation such as one or more applications, data operated on by the application(s), libraries, and drivers.

The compute circuitry 1302 is communicatively coupled to other components of the compute node 1300 via the I/O subsystem 1308, which may be embodied as circuitry and/or components to facilitate input/output operations with the compute circuitry 1302 (e.g., with the processor 1304 and/or the main memory 1306) and other components of the compute circuitry 1302. For example, the I/O subsystem 1308 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 1308 may form a portion of a system-on-a-chip (SoC) and be incorporated, along with one or more of the processor 1304, the memory 1306, and other components of the compute circuitry 1302, into the compute circuitry 1302.

The one or more illustrative data storage devices 1310 may be embodied as any type of devices configured for short-term or long-term storage of data such as, for example, memory devices and circuits, memory cards, hard disk drives, solid-state drives, or other data storage devices. Individual data storage devices 1310 may include a system partition that stores data and firmware code for the data storage device 1310. Individual data storage devices 1310 may also include one or more operating system partitions that store data files and executables for operating systems depending on, for example, the type of compute node 1300.

The communication circuitry 1312 may be embodied as any communication circuit, device, or collection thereof, capable of enabling communications over a network between the compute circuitry 1302 and another compute device (e.g., an edge gateway of an implementing edge computing system). The communication circuitry 1312 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a loT protocol such as IEEE 802.15.4 or ZigBee^{®}, low-power wide-area network (LPWAN) or low-power wide-area (LPWA) protocols, etc.) to effect such communication.

The illustrative communication circuitry 1312 includes a network interface controller (NIC) 1320, which may also be referred to as a host fabric interface (HFI). The NIC 1320 may be embodied as one or more add-in-boards, daughter cards, network interface cards, controller chips, chipsets, or other devices that may be used by the compute node 1300 to connect with another compute device (e.g., an edge gateway node). In some examples, the NIC 1320 may be embodied as part of a system-on-a-chip (SoC) that includes one or more processors, or included on a multichip package that also contains one or more processors. In some examples, the NIC 1320 may include a local processor (not shown) and/or a local memory (not shown) that are both local to the NIC 1320. In such examples, the local processor of the NIC 1320 may be capable of performing one or more of the functions of the compute circuitry 1302 described herein. Additionally, or alternatively, in such examples, the local memory of the NIC 1320 may be integrated into one or more components of the client compute node at the board level, socket level, chip level, and/or other levels.

Additionally, in some examples, a respective compute node 1300 may include one or more peripheral devices 1314. Such peripheral devices 1314 may include any type of peripheral device found in a compute device or server such as audio input devices, a display, other input/output devices, interface devices, and/or other peripheral devices, depending on the particular type of the compute node 1300. In further examples, the compute node 1300 may be embodied by a respective edge compute node (whether a client, gateway, or aggregation node) in an edge computing system or like forms of appliances, computers, subsystems, circuitry, or other components.

In a more detailed example, FIG. 13B illustrates a block diagram of an example of components that may be present in an edge computing node 1350 for implementing the techniques (e.g., operations, processes, methods, and methodologies) described herein. This edge computing node 1350 provides a closer view of the respective components of node 1300 when implemented as or as part of a computing device (e.g., as a mobile device, a base station, server, gateway, etc.). The edge computing node 1350 may include any combinations of the hardware or logical components referenced herein, and it may include or couple with any device usable with an edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the edge computing node 1350, or as components otherwise incorporated within a chassis of a larger system.

The edge computing device 1350 may include processing circuitry in the form of a processor 1352, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 1352 may be a part of a system on a chip (SoC) in which the processor 1352 and other components are formed into a single integrated circuit, or a single package, such as the Edison^{™} or Galileo^{™} SoC boards from Intel Corporation, Santa Clara, California. As an example, the processor 1352 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 1352 and accompanying circuitry may be provided in a single socket form factor, multiple socket form factor, or a variety of other formats, including in limited hardware configurations or configurations that include fewer than all elements shown in FIG. 13B.

The processor 1352 may communicate with a system memory 1354 over an interconnect 1356 (e.g., a bus). Any number of memory devices may be used to provide for a given amount of system memory. As examples, the memory 754 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 1358 may also couple to the processor 1352 via the interconnect 1356. In an example, the storage 1358 may be implemented via a solid-state disk drive (SSDD). Other devices that may be used for the storage 1358 include flash memory cards, such as Secure Digital (SD) cards, microSD cards, eXtreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 1358 may be on-die memory or registers associated with the processor 1352. However, in some examples, the storage 1358 may be implemented using a micro hard disk drive (HDD). Further, any number of new technologies may be used for the storage 1358 in addition to, or instead of, the technologies described, such resistance change memories, phase change memories, holographic memories, or chemical memories, among others.

The components may communicate over the interconnect 1356. The interconnect 1356 may include any number of technologies, including industry standard architecture (ISA), extended ISA (EISA), peripheral component interconnect (PCI), peripheral component interconnect extended (PClx), PCI express (PCIe), or any number of other technologies. The interconnect 1356 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 1356 may couple the processor 1352 to a transceiver 1366, for communications with the connected edge devices 1362. The transceiver 1366 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 1362. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 1366 (or multiple transceivers) may communicate using multiple standards or radios for communications at a different range. For example, the edge computing node 1350 may communicate with close devices, e.g., within about 10 meters, using a local transceiver based on Bluetooth Low Energy (BLE), or another low power radio, to save power. More distant connected edge devices 1362, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 1366 (e.g., a radio transceiver) may be included to communicate with devices or services in a cloud (e.g., an edge cloud 1395) via local or wide area network protocols. The wireless network transceiver 1366 may be a low-power wide-area (LPWA) transceiver that follows the IEEE 802.15.4, or IEEE 802.15.4g standards, among others. The edge computing node 1350 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 1366, as described herein. For example, the transceiver 1366 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 1366 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 1368 may be included to provide a wired communication to nodes of the edge cloud 1395 or to other devices, such as the connected edge devices 1362 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 1368 may be included to enable connecting to a second network, for example, a first NIC 1368 providing communications to the cloud over Ethernet, and a second NIC 1368 providing communications to other devices over another type of network.

Given the variety of types of applicable communications from the device to another component or network, applicable communications circuitry used by the device may include or be embodied by any one or more of components 1364, 1366, 1368, or 1370. Accordingly, in various examples, applicable means for communicating (e.g., receiving, transmitting, etc.) may be embodied by such communications circuitry.

The edge computing node 1350 may include or be coupled to acceleration circuitry 1364, which may be embodied by one or more artificial intelligence (Al) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 1356 may couple the processor 1352 to a sensor hub or external interface 1370 that is used to connect additional devices or subsystems. The devices may include sensors 1372, such as accelerometers, level sensors, flow sensors, optical light sensors, camera sensors, temperature sensors, global navigation system (e.g., GPS) sensors, pressure sensors, barometric pressure sensors, and the like. The hub or interface 1370 further may be used to connect the edge computing node 1350 to actuators 1374, such as power switches, valve actuators, an audible sound generator, a visual warning device, and the like.

In some optional examples, various input/output (I/O) devices may be present within or connected to, the edge computing node 1350. For example, a display or other output device 1384 may be included to show information, such as sensor readings or actuator position. An input device 1386, such as a touch screen or keypad may be included to accept input. An output device 1384 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the edge computing node 1350. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 1376 may power the edge computing node 1350, although, in examples in which the edge computing node 1350 is mounted in a fixed location, it may have a power supply coupled to an electrical grid, or the battery may be used as a backup or for temporary capabilities. The battery 1376 may be a lithium ion battery, or a metal-air battery, such as a zinc-air battery, an aluminum-air battery, a lithium-air battery, and the like.

A battery monitor/charger 1378 may be included in the edge computing node 1350 to track the state of charge (SoCh) of the battery 1376, if included. The battery monitor/charger 1378 may be used to monitor other parameters of the battery 1376 to provide failure predictions, such as the state of health (SoH) and the state of function (SoF) of the battery 1376. The battery monitor/charger 1378 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 1378 may communicate the information on the battery 1376 to the processor 1352 over the interconnect 1356. The battery monitor/charger 1378 may also include an analog-to-digital (ADC) converter that enables the processor 1352 to directly monitor the voltage of the battery 1376 or the current flow from the battery 1376. The battery parameters may be used to determine actions that the edge computing node 1350 may perform, such as transmission frequency, mesh network operation, sensing frequency, and the like.

A power block 1380, or other power supply coupled to a grid, may be coupled with the battery monitor/charger 1378 to charge the battery 1376. In some examples, the power block 1380 may be replaced with a wireless power receiver to obtain the power wirelessly, for example, through a loop antenna in the edge computing node 1350. A wireless battery charging circuit, such as an LTC4020 chip from Linear Technologies of Milpitas, California, among others, may be included in the battery monitor/charger 1378. The specific charging circuits may be selected based on the size of the battery 1376, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 1358 may include instructions 1382 in the form of software, firmware, or hardware commands to implement the techniques described herein. Although such instructions 1382 are shown as code blocks included in the memory 1354 and the storage 1358, it may be understood that any of the code blocks may be replaced with hardwired circuits, for example, built into an application specific integrated circuit (ASIC).

In an example, the instructions 1382 provided via the memory 1354, the storage 1358, or the processor 1352 may be embodied as a non-transitory, machine-readable medium 1360 including code to direct the processor 1352 to perform electronic operations in the edge computing node 1350. The processor 1352 may access the non-transitory, machine-readable medium 1360 over the interconnect 1356. For instance, the non-transitory, machine-readable medium 1360 may be embodied by devices described for the storage 1358 or may include specific storage units such as optical disks, flash drives, or any number of other hardware devices. The non-transitory, machine-readable medium 1360 may include instructions to direct the processor 1352 to perform a specific sequence or flow of actions, for example, as described with respect to the flowchart(s) and block diagram(s) of operations and functionality depicted above. As used herein, the terms "machine-readable medium" and "computer-readable medium" are interchangeable.

Also in a specific example, the instructions 1382 on the processor 1352 (separately, or in combination with the instructions 1382 of the machine readable medium 1360) may configure execution or operation of a trusted execution environment (TEE) 1390. In an example, the TEE 1390 operates as a protected area accessible to the processor 1352 for secure execution of instructions and secure access to data. Various implementations of the TEE 1390, and an accompanying secure area in the processor 1352 or the memory 1354 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 1350 through the TEE 1390 and the processor 1352.

### Software Distribution

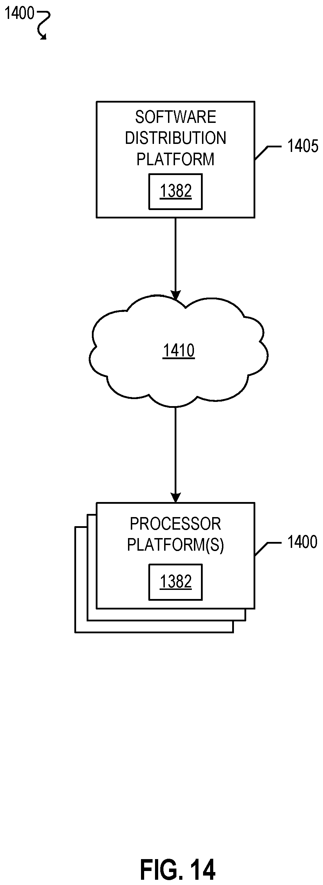

FIG. 14 illustrates an example software distribution platform 1405 to distribute software, such as the example computer readable instructions 1382 of FIG. 13B, to one or more devices, such as example processor platform(s) 1400 and/or example connected edge devices described throughout this disclosure. The example software distribution platform 1405 may be implemented by any computer server, data facility, cloud service, etc., capable of storing and transmitting software to other computing devices (e.g., third parties, example connected edge devices described throughout this disclosure). Example connected edge devices may be customers, clients, managing devices (e.g., servers), third parties (e.g., customers of an entity owning and/or operating the software distribution platform 1405). Example connected edge devices may operate in commercial and/or home automation environments. In some examples, a third party is a developer, a seller, and/or a licensor of software such as the example computer readable instructions 1382 of FIG. 13B. The third parties may be consumers, users, retailers, OEMs, etc. that purchase and/or license the software for use and/or re-sale and/or sub-licensing. In some examples, distributed software causes display of one or more user interfaces (Uls) and/or graphical user interfaces (GUIs) to identify the one or more devices (e.g., connected edge devices) geographically and/or logically separated from each other (e.g., physically separated loT devices chartered with the responsibility of water distribution control (e.g., pumps), electricity distribution control (e.g., relays), etc.).

In the illustrated example of FIG. 14, the software distribution platform 1405 includes one or more servers and one or more storage devices. The storage devices store the computer readable instructions 1382, which may implement the computer vision pipeline functionality described throughout this disclosure. The one or more servers of the example software distribution platform 1405 are in communication with a network 1410, which may correspond to any one or more of the Internet and/or any of the example networks described throughout this disclosure. In some examples, the one or more servers are responsive to requests to transmit the software to a requesting party as part of a commercial transaction. Payment for the delivery, sale and/or license of the software may be handled by the one or more servers of the software distribution platform and/or via a third-party payment entity. The servers enable purchasers and/or licensors to download the computer readable instructions 1382 from the software distribution platform 1405. For example, software comprising the computer readable instructions 1382 may be downloaded to the example processor platform(s) 1400 (e.g., example connected edge devices), which is/are to execute the computer readable instructions 1382 to implement the functionality described throughout this disclosure. In some examples, one or more servers of the software distribution platform 1405 are communicatively connected to one or more security domains and/or security devices through which requests and transmissions of the example computer readable instructions 1382 must pass. In some examples, one or more servers of the software distribution platform 1405 periodically offer, transmit, and/or force updates to the software (e.g., the example computer readable instructions 1382 of FIG. 13B) to ensure improvements, patches, updates, etc. are distributed and applied to the software at the end user devices.

In the illustrated example of FIG. 14, the computer readable instructions 1382 are stored on storage devices of the software distribution platform 1405 in a particular format. A format of computer readable instructions includes, but is not limited to a particular code language (e.g., Java, JavaScript, Python, C, C#, SQL, HTML, etc.), and/or a particular code state (e.g., uncompiled code (e.g., ASCII), interpreted code, linked code, executable code (e.g., a binary), etc.). In some examples, the computer readable instructions 1382 stored in the software distribution platform 1405 are in a first format when transmitted to the example processor platform(s) 1400. In some examples, the first format is an executable binary in which particular types of the processor platform(s) 1400 can execute. However, in some examples, the first format is uncompiled code that requires one or more preparation tasks to transform the first format to a second format to enable execution on the example processor platform(s) 1400. For instance, the receiving processor platform(s) 1400 may need to compile the computer readable instructions 1382 in the first format to generate executable code in a second format that is capable of being executed on the processor platform(s) 1400. In still other examples, the first format is interpreted code that, upon reaching the processor platform(s) 1400, is interpreted by an interpreter to facilitate execution of instructions.

In further examples, a machine-readable medium also includes any tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., Hypertext Transfer Protocol (HTTP)).

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

### Example Embodiments

Illustrative examples of the technologies described throughout this disclosure are provided below. Embodiments of these technologies may include any one or more, and any combination of, the examples described below. In some embodiments, at least one of the systems or components set forth in one or more of the preceding figures may be configured to perform one or more operations, techniques, processes, and/or methods as set forth in the following examples.

Example 1 includes a compute device to implement a node of a computing infrastructure for a computer vision (CV) pipeline, comprising: interface circuitry; and processing circuitry to: receive, via the interface circuitry, a video stream to be processed through the CV pipeline, wherein the CV pipeline comprises a sequence of tasks to be performed on the video stream; perform a first portion of the CV pipeline on the node; receive, via the interface circuitry, a peer node availability for performing a second portion of the CV pipeline, wherein the peer node availability indicates which tasks from the second portion of the CV pipeline a plurality of peer nodes in the computing infrastructure are available to perform; partition the second portion of the CV pipeline into one or more partial CV pipelines to be offloaded to a subset of peer nodes, wherein the subset of peer nodes is selected from the plurality of peer nodes based on the peer node availability; and offload, via the interface circuitry, the one or more partial CV pipelines to the subset of peer nodes.

Example 2 includes the compute device of Example 1, wherein the one or more partial CV pipelines each comprise a corresponding subset of tasks from the second portion of the CV pipeline to be offloaded to a corresponding peer node in the subset of peer nodes.

Example 3 includes the compute device of Example 1, wherein the processing circuitry to perform the first portion of the CV pipeline on the node is further to: determine, based on a runtime context of the CV pipeline, that the second portion of the CV pipeline is to be offloaded from the node.

Example 4 includes the compute device of Example 3, wherein the runtime context of the CV pipeline comprises: an available compute capacity on the node; a required compute capacity to process one or more types of video content in the video stream through the CV pipeline; and one or more performance objectives associated with the CV pipeline or the computing infrastructure.

Example 5 includes the compute device of Example 4, wherein the one or more performance objectives comprise one or more of: a first performance objective associated with the CV pipeline, wherein the first performance objective is specified in a service level agreement (SLA) for the CV pipeline; or a second performance objective associated with the computing infrastructure, wherein the computing infrastructure comprises a plurality of smart cameras and one or more edge server appliances, and wherein the second performance objective is to minimize a load on the one or more edge server appliances.

Example 6 includes the compute device of Example 3, wherein the runtime context of the CV pipeline comprises one or more of: an actual runtime context of the CV pipeline at a current time; or a predicted runtime context of the CV pipeline at a future time, wherein the predicted runtime context is predicted based on a machine learning (ML) model trained to predict future runtime contexts of the CV pipeline based on past runtime contexts of the CV pipeline.

Example 7 includes the compute device of Example 6, wherein the processing circuitry to determine, based on the runtime context of the CV pipeline, that the second portion of the CV pipeline is to be offloaded from the node is further to: receive, via the interface circuitry, a recommendation to offload the second portion of the CV pipeline based on the predicted runtime context of the CV pipeline at the future time.

Example 8 includes the compute device of Example 3, wherein the processing circuitry is further to: determine, based on the runtime context of the CV pipeline, that a performance of one or more tasks in the CV pipeline is to be adjusted; and morph one or more processing modules of the CV pipeline to adjust the performance of the one or more tasks, wherein the one or more tasks are implemented by the one or more processing modules.

Example 9 includes the compute device of Example 8, wherein the processing circuitry to morph the one or more processing modules of the CV pipeline to adjust the performance of the one or more tasks is further to: morph a machine learning (ML) processing module to adjust the performance of an ML inference task in the CV pipeline, wherein: the ML inference task is to infer a type of video content captured in the video stream; the ML processing module implements the ML inference task based on a first ML model; and the ML processing module is morphed to replace the first ML model with a second ML model having different performance characteristics.

Example 10 includes the compute device of Example 1, wherein: the compute device is a smart camera, wherein the smart camera captures the video stream; or the compute device is an edge server appliance, wherein the edge server appliance receives the video stream from the smart camera.

Example 11 includes at least one non-transitory machine-readable storage medium having instructions stored thereon, wherein the instructions, when executed on processing circuitry of a node in a computing infrastructure, cause the processing circuitry to: receive, via interface circuitry, a video stream to be processed through a computer vision (CV) pipeline, wherein the CV pipeline comprises a sequence of tasks to be performed on the video stream; perform a first portion of the CV pipeline on the node; determine, based on a runtime context of the CV pipeline, that a second portion of the CV pipeline is to be offloaded from the node; receive, via the interface circuitry, a peer node availability for performing the second portion of the CV pipeline, wherein the peer node availability indicates which tasks from the second portion of the CV pipeline a plurality of peer nodes in the computing infrastructure are available to perform; partition the second portion of the CV pipeline into one or more partial CV pipelines to be offloaded to a subset of peer nodes, wherein the subset of peer nodes is selected from the plurality of peer nodes based on the peer node availability; and offload, via the interface circuitry, the one or more partial CV pipelines to the subset of peer nodes.

Example 12 includes the storage medium of Example 11, wherein the one or more partial CV pipelines each comprise a corresponding subset of tasks from the second portion of the CV pipeline to be offloaded to a corresponding peer node in the subset of peer nodes.

Example 13 includes the storage medium of Example 11, wherein the runtime context of the CV pipeline comprises: an available compute capacity on the node; a required compute capacity to process one or more types of video content in the video stream through the CV pipeline; and one or more performance objectives associated with the CV pipeline or the computing infrastructure.

Example 14 includes the storage medium of Example 13, wherein the one or more performance objectives comprise one or more of: a first performance objective associated with the CV pipeline, wherein the first performance objective is specified in a service level agreement (SLA) for the CV pipeline; or a second performance objective associated with the computing infrastructure, wherein the computing infrastructure comprises a plurality of smart cameras and one or more edge server appliances, and wherein the second performance objective is to minimize a load on the one or more edge server appliances.

Example 15 includes the storage medium of Example 11, wherein the runtime context of the CV pipeline comprises one or more of: an actual runtime context of the CV pipeline at a current time; or a predicted runtime context of the CV pipeline at a future time, wherein the predicted runtime context is predicted based on a machine learning (ML) model trained to predict future runtime contexts of the CV pipeline based on past runtime contexts of the CV pipeline.

Example 16 includes the storage medium of Example 15, wherein the instructions that cause the processing circuitry to determine, based on the runtime context of the CV pipeline, that the second portion of the CV pipeline is to be offloaded from the node further cause the processing circuitry to: receive, via the interface circuitry, a recommendation to offload the second portion of the CV pipeline based on the predicted runtime context of the CV pipeline at the future time.

Example 17 includes the storage medium of Example 11, wherein the instructions further cause the processing circuitry to: determine, based on the runtime context of the CV pipeline, that a performance of one or more tasks in the CV pipeline is to be adjusted; and morph one or more processing modules of the CV pipeline to adjust the performance of the one or more tasks, wherein the one or more tasks are implemented by the one or more processing modules.

Example 18 includes the storage medium of Example 17, wherein the instructions that cause the processing circuitry to morph the one or more processing modules of the CV pipeline to adjust the performance of the one or more tasks further cause the processing circuitry to: morph a machine learning (ML) processing module to adjust the performance of an ML inference task in the CV pipeline, wherein: the ML inference task is to infer a type of video content captured in the video stream; the ML processing module implements the ML inference task based on a first ML model; and the ML processing module is morphed to replace the first ML model with a second ML model having different performance characteristics.

Example 19 includes a method of processing a video stream through a computer vision (CV) pipeline on a computing infrastructure, comprising: receiving the video stream to be processed through the CV pipeline, wherein the CV pipeline comprises a sequence of tasks to be performed on the video stream; performing a first portion of the CV pipeline on a first node of the computing infrastructure; determining, based on a runtime context of the CV pipeline, that a second portion of the CV pipeline is to be offloaded from the first node; receiving a peer node availability for performing the second portion of the CV pipeline, wherein the peer node availability indicates which tasks from the second portion of the CV pipeline a plurality of peer nodes in the computing infrastructure are available to perform; partitioning the second portion of the CV pipeline into one or more partial CV pipelines to be offloaded to a subset of peer nodes, wherein the subset of peer nodes is selected from the plurality of peer nodes based on the peer node availability; and offloading the one or more partial CV pipelines to the subset of peer nodes.

Example 20 includes the method of Example 19, wherein the runtime context of the CV pipeline comprises: an available compute capacity on the first node; a required compute capacity to process one or more types of video content in the video stream through the CV pipeline; and one or more performance objectives associated with the CV pipeline or the computing infrastructure.

Example 21 includes the method of Example 19, wherein the runtime context of the CV pipeline comprises one or more of: an actual runtime context of the CV pipeline at a current time; or a predicted runtime context of the CV pipeline at a future time, wherein the predicted runtime context is predicted based on a machine learning (ML) model trained to predict future runtime contexts of the CV pipeline based on past runtime contexts of the CV pipeline.

Example 22 includes the method of Example 19, further comprising: determining, based on the runtime context of the CV pipeline, that a performance of one or more tasks in the CV pipeline is to be adjusted; and morphing one or more processing modules of the CV pipeline to adjust the performance of the one or more tasks, wherein the one or more tasks are implemented by the one or more processing modules.

Example 23 includes the method of Example 22, wherein morphing the one or more processing modules of the CV pipeline to adjust the performance of the one or more tasks comprises: morphing a machine learning (ML) processing module to adjust the performance of an ML inference task in the CV pipeline, wherein: the ML inference task is to infer a type of video content captured in the video stream; the ML processing module implements the ML inference task based on a first ML model; and the ML processing module is morphed to replace the first ML model with a second ML model having different performance characteristics.

Example 24 includes a system to implement a node of a computing infrastructure for a computer vision (CV) pipeline, comprising: interface circuitry; accelerator circuitry to accelerate one or more machine learning (ML) inference tasks; and processing circuitry to: receive, via the interface circuitry, a video stream to be processed through the CV pipeline, wherein the CV pipeline comprises a sequence of tasks to be performed on the video stream; perform a first portion of the CV pipeline on the node, wherein the one or more ML inference tasks are included in the first portion of the CV pipeline and are accelerated using the accelerator circuitry; determine, based on a runtime context of the CV pipeline, that a second portion of the CV pipeline is to be offloaded from the node; receive, via the interface circuitry, a peer node availability for performing the second portion of the CV pipeline, wherein the peer node availability indicates which tasks from the second portion of the CV pipeline a plurality of peer nodes in the computing infrastructure are available to perform; partition the second portion of the CV pipeline into one or more partial CV pipelines to be offloaded to a subset of peer nodes, wherein the subset of peer nodes is selected from the plurality of peer nodes based on the peer node availability; and offload, via the interface circuitry, the one or more partial CV pipelines to the subset of peer nodes.

Example 25 includes the system of Example 24, wherein: the system is a smart camera, wherein the smart camera captures the video stream; or the system is an edge server appliance, wherein the edge server appliance receives the video stream from the smart camera.

While the concepts of the present disclosure are susceptible to various modifications and alternative forms, specific embodiments thereof have been shown by way of example in the drawings and are described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one of A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage media, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

## Claims

1. A method of processing a video stream through a computer vision (CV) pipeline on a computing infrastructure, comprising:
receiving the video stream to be processed through the CV pipeline, wherein the CV pipeline comprises a sequence of tasks to be performed on the video stream;
performing a first portion of the CV pipeline on a first node of the computing infrastructure;
receiving a peer node availability for performing a second portion of the CV pipeline, wherein the peer node availability indicates which tasks from the second portion of the CV pipeline a plurality of peer nodes in the computing infrastructure are available to perform;
partitioning the second portion of the CV pipeline into one or more partial CV pipelines to be offloaded to a subset of peer nodes, wherein the subset of peer nodes is selected from the plurality of peer nodes based on the peer node availability; and
offloading the one or more partial CV pipelines to the subset of peer nodes.

2. The method of Claim 1, wherein:
the first node is a smart camera, wherein the smart camera captures the video stream; or
the first node is an edge server appliance, wherein the edge server appliance receives the video stream from the smart camera.

3. The method of any of Claims 1-2, wherein the one or more partial CV pipelines each comprise a corresponding subset of tasks from the second portion of the CV pipeline to be offloaded to a corresponding peer node in the subset of peer nodes.

4. The method of any of Claims 1-3, wherein performing the first portion of the CV pipeline on the first node of the computing infrastructure comprises:
determining, based on a runtime context of the CV pipeline, that the second portion of the CV pipeline is to be offloaded from the first node.

5. The method of Claim 4, wherein the runtime context of the CV pipeline comprises:
an available compute capacity on the first node;
a required compute capacity to process one or more types of video content in the video stream through the CV pipeline; and
one or more performance objectives associated with the CV pipeline or the computing infrastructure.

6. The method of Claim 5, wherein the one or more performance objectives comprise one or more of:
a first performance objective associated with the CV pipeline, wherein the first performance objective is specified in a service level agreement (SLA) for the CV pipeline; or
a second performance objective associated with the computing infrastructure, wherein the computing infrastructure comprises a plurality of smart cameras and one or more edge server appliances, and wherein the second performance objective is to minimize a load on the one or more edge server appliances.

7. The method of Claim 4, wherein the runtime context of the CV pipeline comprises one or more of:
an actual runtime context of the CV pipeline at a current time; or
a predicted runtime context of the CV pipeline at a future time, wherein the predicted runtime context is predicted based on a machine learning (ML) model trained to predict future runtime contexts of the CV pipeline based on past runtime contexts of the CV pipeline.

8. The method of Claim 7, wherein determining, based on the runtime context of the CV pipeline, that the second portion of the CV pipeline is to be offloaded from the first node comprises:
receiving a recommendation to offload the second portion of the CV pipeline based on the predicted runtime context of the CV pipeline at the future time.

9. The method of any of Claims 4-8, further comprising:
determining, based on the runtime context of the CV pipeline, that a performance of one or more tasks in the CV pipeline is to be adjusted; and
morphing one or more processing modules of the CV pipeline to adjust the performance of the one or more tasks, wherein the one or more tasks are implemented by the one or more processing modules.

10. The method of Claim 9, wherein morphing the one or more processing modules of the CV pipeline to adjust the performance of the one or more tasks comprises:
morphing a machine learning (ML) processing module to adjust the performance of an ML inference task in the CV pipeline, wherein:
the ML inference task is to infer a type of video content captured in the video stream;
the ML processing module implements the ML inference task based on a first ML model; and
the ML processing module is morphed to replace the first ML model with a second ML model having different performance characteristics.

11. An apparatus comprising means to perform a method as claimed in any preceding claim.

12. At least one machine accessible storage medium having instructions stored thereon, the instructions when executed on a machine, cause the machine to perform a method or realize an apparatus as claimed in any preceding claim.
